(19) Europäisches Patentamt
European Patent Office
Office européen des brevets

(11) **EP 3 106 336 B1**

(12) **EUROPEAN PATENT SPECIFICATION**

(45) Date of publication and mention of the grant of the patent:
**06.06.2018   Bulletin 2018/23**

(21) Application number: **15172154.5**

(22) Date of filing: **15.06.2015**

(51) Int Cl.:
*B60K 6/36* *(2007.10)*        *B60K 6/365* *(2007.10)*
*B60K 6/48* *(2007.10)*        *B60K 6/547* *(2007.10)*
*F16H 3/72* *(2006.01)*        *F16H 3/00* *(2006.01)*
*B60W 10/02* *(2006.01)*        *B60W 10/06* *(2006.01)*
*B60W 10/08* *(2006.01)*        *B60W 10/113* *(2012.01)*

(54) **MULTI-SPEED TRANSMISSION AND METHOD FOR OPERATING A MULTI-SPEED TRANSMISSION**

MEHRGANGGETRIEBE UND VERFAHREN ZUM BETREIBEN EINES MEHRGANGGETRIEBES

TRANSMISSION À PLUSIEURS VITESSES ET PROCÉDÉ POUR FAIRE FONCTIONNER UNE TRANSMISSION À PLUSIEURS VITESSES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**21.12.2016   Bulletin 2016/51**

(73) Proprietor: **AVL List GmbH**
**8020 Graz (AT)**

(72) Inventors:
 • **DAVYDOV, Vitaly**
   **8020 GRAZ (AT)**
 • **NISSEN, Peter-Jürgen**
   **A-8045 Graz (AT)**
 • **DE BEI, Marco**
   **A-8010 Graz (AT)**

(74) Representative: **Babeluk, Michael**
**Patentanwalt**
**Florianigasse 26/3**
**1080 Wien (AT)**

(56) References cited:
**EP-A1- 2 161 154        DE-A1-102007 042 949**
**US-A1- 2010 173 746        US-A1- 2011 111 910**

**Description**

The invention relates to a multi-speed transmission, comprising an input shaft, a first driveshaft and a second driveshaft, each of the two concentric driveshafts having at least two driving gearwheels, a driven shaft with a plurality of gearwheels on it meshing with the driving gearwheels on said driveshafts, said gearwheels for forward speeds being engageable to said shafts with clutches forming a power flow from said driveshafts to the driven shaft with different ratios, wherein one gearwheel in each said gear wheels meshing is constantly connected to a corresponding shaft, and another gearwheel in said gear wheels meshing is engageable to a corresponding shaft by one of said clutches, a controllable lock-up clutch being arranged between the driveshafts, connecting said driveshafts with each other, an electric machine with a rotor, a planetary gearset with three links, a first of said links being connected to the first driveshaft and the input shaft, a second link being connected to the second driveshaft, and a third link being kinematically connected to the rotor of said electric machine, wherein the speed ratio between the second link and the third link for stopped first link has defined value: $i_{PGS} < 0$ and the gear ratio between gearwheels of a first gearing with one of said gearwheels arranged on the second driveshaft has defined value: $i_{G1}$.

Each of the documents US 2011/111910 A1, which discloses the features of the preamble of claim 1, EP 2 161 154 A1 or US 2010/173746 A1 discloses a multispeed transmission comprising an input shaft, a first driveshaft and a second driveshaft, an electric machine, a minus-planetary gearset with three links and a lock-up clutch to connect the first driveshaft and the second driveshaft. The first link is connected to the first drive shaft, the second link is connected to second driveshaft. The third link is connected to the rotor of the electric machine.

The document US 8,771,139 B2 describes a power transmission unit with an engine and a plurality of speed change gear pairs, each of which has a different gear ratio, and to which a power outputted from the engine is transmitted. The power transmission unit comprises a differential mechanism, which has three rotary elements performing a differential action, and in which a first rotary element is connected with the engine. An electric motor is connected with a secondary rotary element of the three rotary elements. The plurality of speed change gear pairs include a first gear pair connected with the first rotary element and the output member, and a second gear pair connected with a third rotary element of the three rotary elements and the output member. For a carrier-to-sun-connection a separate lock-up clutch, which is apart from the plurality of clutches for engaging the gears, as well a separate actuator for that lock-up clutch, are necessary. A common shifting actuator, e.g. a shifting drum, cannot be used. The particular embodiment of the transmission comprises four cylindrical gearings, which provide only four speeds from the engine to the wheels. To increase number of speeds, or/and to add reverse, it is necessary to increase number of gearings. This approach increases transmission length, weight and drag losses.

It is the object of the present invention to avoid these disadvantages and to provide a compact and low-cost multi-speed transmission with increased number of torque-fill shifted speeds.

According to the invention this is achieved in that:

- a second driveshaft, has at least three driving gearwheels;

- the gear ratio between gearwheels of the first gearing with one of said gearwheels arranged on the first driveshaft matches the inequality $i_{G2} < i_{G1}/ (1-(1/i_{PGS}))$;

- the gear ratio between gearwheels of the second gearing with one of said gearwheels arranged on the second driveshaft matches the inequality $i_{G3} < i_{G2}$;

- the gear ratio between gearwheels of the second gearing with one of said gearwheels arranged on the first driveshaft matches the inequality $i_{G4} < i_{G3}/ (1-(1/i_{PGS}))$;

- the gear ratio between gearwheels of the third gearing with one of said gearwheels arranged on the second driveshaft matches the inequality $i_{G5} < i_{G4}$.

According to the preferred embodiment, the driven shaft has at least two gearwheels rotationally fixed on it, at least four gearwheels mounted on it in a rotationally free manner, and at least two clutches mounted on it, wherein at least one of said clutches is double-sided clutch, at least one rotationally fixed gearwheel is arranged between two rotationally free gearwheels, and at least one of said double-sided clutches is arranged between two said rotationally free gearwheels in a way that it can alternatively engage two said rotationally free gearwheels to the driven shaft.

According to the preferred embodiment, the shifting sleeve of at least one of said double-sided clutches is through-mounted on the corresponding driven gearwheel, wherein said driven gearwheel is rigidly fixed on the driven shaft.

Preferably the clutches are designed as dog clutches. Dog clutches are most compact, cheap and energy saving clutches. Conventional friction-based synchronizers are not required.

More preferably the clutches are designed as dog clutches with synchronizers. In this way reduced electric power is necessary to synchronize the shafts during gear preselection on the second driveshaft.

According to a low-cost variation, the driven shaft comprises at list one spline mesh, the driven gearwheel is mounted on said splines and locked in axial direction, wherein driven gearwheel further comprises circular array of the slots on the hub in a way that a fraction of the splines is removed and the fraction of the corresponding spline mesh of the driven shaft is free, and wherein the corresponding shifting sleeve comprises dog teeth with splines on the internal diameter, which interact with free splines on the driven shaft, and said dog teeth go through said slots with a clearance in tangential direction.

According to another low cost variation, with reduced number of components, at least one clutch is combined with corresponding driven gearwheel, wherein said driven gearwheel is slidable mounted on the driven shaft. The driven gear may be spur, and be connected to the driven shaft by straight splines, wherein the dog teeth of corresponding clutch have symmetric profile.

Alternatively the driven gear may be helical, and be connected to the driven shaft by helical splines in a way that axial forces from the gearing and from the splines counteract at least partially balancing, wherein the dog teeth of said corresponding clutch have asymmetric profile in a way that axial forces from the splines and dog teeth also counteract at least partly balancing. Helical gear improves NVH performance. Special measures are taken to balance axial forces in order to unload shifting fork and/to detents from constant axial forces.

In order to realize axially compact package of the clutch with reduced number of shifting forks at least one clutch is embodied in a way that it can alternatively connect two loose gearwheels to the output shaft, and wherein said gearwheels are arranged on opposite sides of the gearwheel which is fixed to the output shaft.

At least two dog clutches are arranged in a way that they interact with rotationally fixed gear, wherein the rotationally fixed gear may be mounted slideable or rigidly fixed in axial direction. In an embodiment with sliding gear the gear mesh of loose gearwheels is preferably helical, and the axial forces are balanced. Conventional synchronizers are long and need much axial package. Dog clutches, which are preferred in the invention, have a potential to reduce axial package. However, the hubs of the driven gearwheels should not be too short, otherwise tilting increases under axial load from helical gearing. So there is much empty space around the dog clutch.

In order to improve the NVH performance and the shifting quality of the transmission a vibration-damping device (e.g. a dual-mass-flywheel) may be arranged on the input shaft.

If another rotationally fixed gearwheel is placed together with shifting sleeve (integrated with it or other shift element is mounted through the gearwheel), the axial package remains as it was without the gearwheel.

In state of the art manual transmissions just reverse gear is embodied this way. The limitation of the state of art is that reverse gear should be straight-cut (spur).

The additional technical results of these features are reduced axial package, reduced shaft bending, and small tilting of driven gearwheels under axial loads from helical meshing. Cost and weight of the transmission are also reduced.

The multispeed transmission preferably comprises a controllable lock-up clutch being arranged between the driveshafts, connecting said driveshafts with each other, an electric machine with a rotor, and the planetary gearset with three links. A first of said links may be connected to the first driveshaft and the input shaft, a second link may be connected to the second driveshaft, and a third link may be kinematically connected to the rotor of said electric machine in a way that a speed ratio between the second link and the third link is negative for stopped first link. According to a very simple embodiment of the invention fulfilling the requirements of said speed ratio the first link of the planetary gearset is a planet carrier, the second link is a ring gear, and the third link is a sun gear.

According to a preferred embodiment of the invention the second driveshaft may be mounted internally through the first driveshaft. This embodiment gives the opportunity to have first and reverse driving pinions with high ratio on the thin internal driveshaft. The 1st and reverse speeds are arranged on the second driveshaft.

According to a design variation of the invention with integrated final drive for transverse mounting and transaxle mounting (two wheel drive) or transfer gear with central differential (four wheel drive), the transmission comprises a gearwheel which constantly meshes with a pinion on the driven shaft, wherein driven links of the differential are connected to the output shafts of the transmission, and wherein preferably the gearwheel is arranged parallel to the input shaft.

A compact and low-cost multi-speed transmission with increased number of torque-fill shifted speeds can be achieved in that the transmission comprises a first clutch, a second clutch and a third clutch, wherein each of the clutches comprises a first locking position, a second locking position and a neutral position. For example the first locking position is assigned to a left side position, the second locking position is assigned to a right side locking position and the neutral position is assigned to a middle position of each clutch. Preferably the first and second clutches are arranged on the driven shaft. The first locking positions and the second locking positions of the first and second clutches are designed for kinematic connection of the first driveshaft or second driveshaft to the driven shaft with different gear ratios. More preferably the third clutch is arranged coaxial to the first and second driveshafts. In the first locking position the third clutch has the function of a lock up clutch for direct kinematic connection of first and second driveshafts.

According to the invention for a 5-speed embodiment with 5-speed geartrain the first driveshaft comprises driving gearwheels for 1st and 3rd speeds, and the second driveshaft comprises driving gearwheels for reverse, launch, 2nd, and 4th/5th speeds, wherein 1st and 3rd speeds are provided by engaged clutch of corresponding gear pair, 2nd and 4th speeds are provided by engaged clutch of corresponding gear pair, and engaged lock-up clutch, reverse speed is provided by meshing of the reverse idler with driving gearwheel and driven gearwheel, and torque reaction from the rotor of the electric machine, and launch and 5th speeds are provided by engaged clutch of corresponding gear pair and torque reaction from the rotor of the electric machine. This enables a 5-speed low-cost variation with start/stop function, wherein inverter and battery capacities provide around 3% of engine rated power.

In detail the gear ratios of said kinematic connections are assigned in a way that:

- launch speed from the second driveshaft to the driven shaft is provided by a first position of the first clutch and electrical lock of the electric machine rotor;

- first speed from the first driveshaft to the driven shaft is provided by a second position of the second clutch;

- second speed from the second driveshaft to the driven shaft is provided by a second position of the first clutch;

- third speed from the first driveshaft to the driven shaft is provided by a second position of the third clutch;

- fourth speed from the second driveshaft to the driven shaft is provided by simultaneous engagement of the second clutch and the third clutch, i.e. a first position of the second clutch and a first position of the third clutch;

- fifth speed from the second driveshaft to the driven shaft is provided by a first position of the second clutch and electrical lock of the electric machine rotor;

- reverse speed from the second driveshaft to the driven shaft is provided by meshing of the reverse idler with the driving wheel of the second driveshaft and driven gearwheel, and electrical lock of the electric machine rotor.

Clutches which are not referred are switched in neutral positions.

According to the invention for a 6-speed embodiment with 5-speed geartrain the first driveshaft comprises driving gearwheels for 2nd and 4th speeds, and the second driveshaft comprises driving gearwheels for reverse, 1st, 3rd and 5th/6th speeds, wherein 2nd and 4th speeds are provided by engaged clutch of corresponding gear pair, 3rd and 5th speeds are provided by engaged clutch of corresponding gear pair, and engaged lock-up clutch, reverse speed is provided by meshing of the reverse idler with driving gearwheel and driven gearwheel, and torque reaction from the rotor of the electric machine, and 1st and 6th speeds are provided by engaged clutch of corresponding gear pair and torque reaction from the rotor of the electric machine. In this way a 6-speed micro hybrid variation can be realized, wherein inverter and battery capacities provide around 6% of engine rated power. Comparing to 5-speed embodiment, the step between two lowest gears is increased to transform "launch" gear to 1st gear. Larger inverter and battery capacities make possible to provide active torque-filled shift from 1st to 2nd speed at limited rotational speed of the input shaft.

In detail the gear ratios of said kinematic connections are assigned in a way that:

- first speed from the second driveshaft to the driven shaft is provided by a first position of the first clutch and electrical lock of the electric machine rotor;

- second speed from the first driveshaft to the driven shaft is provided by a second position of the second clutch;

- third speed from the second driveshaft to the driven shaft is provided by simultaneous engagement of the first clutch and the third clutch, i.e., a second position of the first clutch and a first position (lock-up position) of the third clutch;

- fourth speed from the first driveshaft to the driven shaft is provided by a second position of the third clutch;

- fifth speed from the second driveshaft to the driven shaft is provided by simultaneous engagement of the second clutch and the third clutch, i.e. a first position of the second clutch and a first position (lock-up position) of the third clutch;

- sixth speed from the second driveshaft to the driven shaft is provided by a first position of the second clutch and electrical lock of the electric machine rotor;

- reverse speed from the second driveshaft to the driven shaft is provided by meshing of the reverse idler with the driving gearwheel of the second driveshaft and driven gearwheel, and electrical lock of the electric machine rotor.

According to the invention for a 7-speed embodiment with 5-speed geartrain the first driveshaft comprises driving gearwheels for 2nd and 5th speeds, and the second driveshaft comprises driving gearwheels for reverse, 1st, 3rd/4th and 6th/7th speeds, wherein 2nd and 5th speeds are provided by engaged clutch of corresponding gear pair, 3rd and 6th speeds are provided by engaged clutch of corresponding gear pair, and engaged lock-up clutch, reverse speed is provided by meshing of the reverse idler with driving gearwheel and driven gearwheel, and torque reaction from the rotor of the electric machine, and 1st, 4th and 7th speeds are provided by engaged clutch of corresponding gear pair and torque reaction from the rotor of the electric machine. In this way a 7-speed mild hybrid variation can be realized, wherein inverter and battery capacities provide around 12% of engine rated power. Comparing to 6-speed embodiment, additional speed is introduced between 3rd and 4th speeds. Larger inverter and battery capacities make possible to provide active torque-filled shift from 4th to 5th speed. Also, the step between 1st and 2nd gears may be increased with the same torque fill capacity.

In detail the gear ratios of said kinematic connections are assigned in a way that:

- first speed from the second driveshaft to the driven shaft is provided by a first position of the first clutch and electrical lock of the electric machine rotor;

- second speed from the first driveshaft to the driven shaft is provided by a second position of the second clutch;

- third speed from the second driveshaft to the driven shaft is provided by simultaneous engagement of the first clutch and the third clutch, i.e., a second position of the first clutch and a first position (lock-up position) of the third clutch;

- fourth speed from the second driveshaft to the driven shaft is provided by a second position of the first clutch and electrical lock of the electric machine rotor;

- fifth speed from the first driveshaft to the driven shaft is provided by a second position of the third clutch;

- sixth speed from the second driveshaft to the driven shaft is provided by simultaneous engagement of the second clutch and the third clutch, i.e., a first position of the second clutch and a first position (lock-up position) of the third clutch;

- seventh speed from the second driveshaft to the driven shaft is provided by a first position of the second clutch and electrical lock of the electric machine rotor;

- reverse speed from the second driveshaft to the driven shaft is provided by meshing of the reverse idler with the driving gearwheel of the second driveshaft and driven gearwheel, and electrical lock of the electric machine rotor.

Preferably a controllable separation friction clutch is arranged on the input shaft. The controllable friction-separation clutch enables seamless engine start-up in the pure electric vehicle driving mode.

A low cost pure electric vehicle driving mode can be realized with a one way brake arranged in a way that it locks one of the links constantly connected to the first driveshaft in case if said driveshaft rotates opposite to normal direction of engine crankshaft rotation.

Alternatively a one way brake may be arranged in a way that it locks one of the links constantly connected to the second driveshaft in case if said driveshaft rotates opposite to normal direction of engine crankshaft rotation. So the engine can be started when no automatic wheel brake activation, e.g. no ABS or ESP, is available.

The transmission may comprise a park brake device, which locks the driven shaft to the housing.

The number of shifting forks can be reduced down to three if the lock-up clutch and one of the clutches engaging one of the pinions with the first driveshaft, are sharing a common shifting sleeve.

According to a preferred embodiment of the present invention the clutches are engaged by single electrically driven shifting drum, and the reverse idler gearwheel is engaged by separate actuator. A single shifting drum is a low-cost solution for a shifting system. With 5-speed geartrain the shifting pattern is quite flexible even in 6- and 7-speed embodiments. All practically required skipped long shift combinations are possible just with one intermediate shift. According to a low cost variation of the reverse gear actuation the reverse idler gearwheel may be engaged by mechanical drive linked to the hand-operated shifting lever. Alternatively the reverse idler gearwheel may be engaged by electric drive. This shift-by-wire modification provides more comfort to the driver.

The rotor of the electric machine is connected to the third link of the planetary gearset via cylindrical geartrain, and the axis of the rotor is preferably placed apart from the axis of the input shaft. This feature gives opportunity to reduce rotor inertia, as well as to provide direct liquid rotor cooling through the shaft.

In a preferred embodiment of the invention the electric machine is an induction machine with squirrel-caged rotor. The induction machine is a simple and reliable brushless electric machine. The squirrel-caged rotor gives opportunity for internal power dissipation by large slip, without overloading the control system, e.g. a multi-phase bridge inverter, which is connected to the stator coils. The induction machine with squirrel- caged rotor allows to dissipate large fraction of the shaft power in squirrel cage during braking. This fraction of power does not circulate in stator windings. That makes possible to downsize the inverter and the electric machine for all presented embodiments except 7-speed full hybrid. The rotor of the electric machine may comprise at least one cooling channel for liquid cooling of the squirrel cage. Forced liquid cooling is necessary for heavy modes like hill launch or repetitive launch in heavy traffic. Heavy launch is the worst case for power dissipation in the rotor. Direct oil cooling improves repetitive start capability of the vehicle and makes possible the further downsizing of the electric machine. In an embodiment not presently claimed, torque filled shifts are performed with torque applied to the input shaft from the prime mover at least during one of the shift phases, the electric machine is controlled by its control system during torque-filled shifts in a way that it allows to reduce torque value down to zero on the first driveshaft by applying driving power in case of negative direction of rotation of the rotor, and applying brake power in case of positive direction of rotation of the rotor, wherein the brake power is partly dissipated in the electric machine as heat and partly delivered to the battery with associated electric power consumers, and the driving power plus internal losses are taken from the battery, and wherein the torque on the input shaft is dynamically limited by the control system of the prime mover and the control system of the electric machine in case if required driving power plus internal losses from the battery exceed the capacity of the battery and/or control system to reduce torque value down to zero on the first driveshaft with full torque on the input shaft.

Furthermore, in this embodiment, the torque on the input shaft is dynamically limited by simultaneous reduction of output torque from the prime mover and electromagnetic torque of the electric machine during torque handover shifting phases.

Furthermore, in this embodiment, the torque on the input shaft is dynamically limited by removing the driving torque from the prime mover by reducing the electromagnetic torque of the electric machine during speed synchronization shifting phase.

The benefits of the inventive device are:

(1) The electrical power source and power inverter can be designed with reduced power capacity.

(2) Equalized mean torque fill percentage in active and passive torque fill shifts improves the perception of the driver.

(3) Transmission gear steps around the "mechanical points" and higher gear are limited by required torque fill capacity and the power capacities of the battery and the inverter. With low capacity it is possible to realize passive torque-filled shifts with high rate of power dissipation in the rotor cage. Gear steps between each "mechanical point" and higher gear should be reduced down to around 1,05..1,1, and two of three mechanical points should not be used as fixed speeds due to unacceptable stepping. With higher capacity it is possible to increase said steps to realize actively torque-filled 6- and 7-speed transmission embodiments based on the 5-speed geartrain. This approach on the device makes possible to build transmission family basing on the common mechanical hardware and electric machine.

The invention is explained below in closer detail by reference to the drawings, wherein:

Fig. 1     is a schematic illustration of a multi speed transmission in a 5-speed embodiment with 5-speed geartrain and single shifting drum in accordance with a first embodiment of the invention;

Fig. 2     schematically shows a shift pattern of the 5-speed embodiment in accordance with the first embodiment of the invention;

Fig. 3     is a schematic illustration of a multi speed transmission in a 6-speed embodiment with 5-speed geartrain and single shifting drum in accordance with a second embodiment of the invention (Micro Hybrid);

Fig. 4     schematically shows a shift pattern of the 6-speed embodiment in accordance with the second embodiment of the invention;

Fig. 5     is a schematic illustration of a multi speed transmission in a 7-speed embodiment with 5-speed geartrain and single shifting drum in accordance with a third embodiment of the invention (Mild Hybrid);

Fig. 6     is a schematic illustration of a multi speed transmission in a 7-speed embodiment with 5-speed geartrain, single shifting drum and one way brakes on the driveshaft in accordance with a fourth embodiment of the invention (Mild Hybrid with EV maneuvering capacity);

Fig. 7     schematically shows a shift pattern of the 7-speed embodiment in accordance with the third or fourth embod-

Fig. 8    is a schematic illustration of a multi speed transmission in a 7-speed embodiment with 5-speed geartrain, flexible shifting mechanism and separation clutch in accordance with a fifth embodiment of the invention (Full Hybrid);

Fig. 9    shows a power flow chart example for base 5-speed embodiment,
Fig. 10    shows a rotational speed chart example for base 5-speed embodiment,
Fig. 11    shows a power flow chart example for the 6-speed embodiment,
Fig. 12    shows a rotational speed chart example for the 6-speed embodiment,
Fig. 13    shows a power flow chart example for the 7-speed embodiment,
Fig. 14    shows a rotational speed chart example for the 7-speed embodiment,
Fig. 15    shows a wheel torque chart example at shift 3 → 4 of the 6-speed embodiment;
Fig. 16    shows a rotational speed chart example at shift 3 → 4 of the 6-speed embodiment;
Fig. 17    shows a power chart example at shift 3 → 4 of the 6-speed embodiment;
Fig. 18    shows a wheel torque chart example at shift 4 → 5 of the 6-speed embodiment;
Fig. 19    shows a rotational speed chart example at shift 4 → 5 of the 6-speed embodiment;
Fig. 20    shows a power chart example at shift 4 → 5 of the 6-speed embodiment;
Fig. 21    shows a wheel torque chart example at shift 4 → 5 of the 7-speed embodiment;
Fig. 22    shows a rotational speed chart example at shift 4 → 5 of the 7-speed embodiment;
Fig. 23    shows a power chart example at shift 4 → 5 of the 7-speed embodiment;
Fig. 24    a) to h) show schematic illustrations of a detail of a multi speed transmissions according to the present invention with variations and different positions of the clutch C1;
Fig. 25    shows an oblique projection of a helical sliding gear of a multi speed transmission;
Fig. 26    is a development view of the lead grooves on a single shifting drum for guiding shift fork pins of the C1, C2 and C3 dog clutches, in accordance with embodiments of invention from first to fourth;
Fig. 27    schematically shows a shift pattern of the 7-speed embodiment in accordance with the fifth embodiment of the invention;
Fig. 28    is a schematic illustration of a multi-speed transmission for longitudinal arrangement in a 7-speed embodiment with 5-speed 3-shaft geartrain and direct 6th speed (Mild Hybrid).
Fig. 29    shows an oblique projection with a cut of the alternative embodiment of the clutch C2, with the sleeve of the clutch C2 not shown in the Figure.
Fig. 30    shows an exploded oblique projection of the alternative embodiment of the C2 clutch.
Fig. 31    a) to c) shows an oblique projection with a cut of the alternative embodiment of the C2 clutch in different positions of the shifting sleeve.

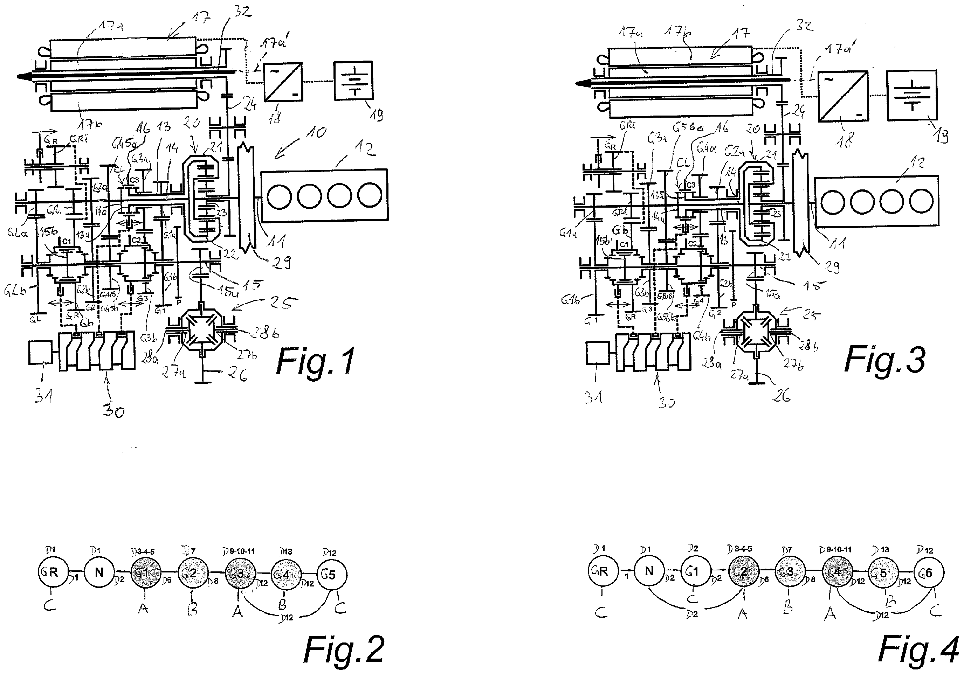

Fig. 1 shows a basic 5-speed embodiment with a 5-speed transmission 10 with start/stop capability for a vehicle comprising an input shaft 11 attached to a prime mover 12, for example a combustion engine, a first driveshaft 13 and a second driveshaft 14, wherein the driveshafts 13, 14 are arranged concentrically. In the embodiments the second driveshaft 14 is mounted internally through the first driveshaft 13.

The first driveshaft 13 comprises a plurality of driving gearwheels G1a, G3a for 1st and 3rd speeds G1, G3, meshing with corresponding driven gearwheels G1b and G3b of the driven shaft 15. The second driveshaft 14 has a plurality of driving gearwheels GRa, GLa, G2a, G45a, for reverse GR, launch GL and 2nd, 4th/5th speeds GL, G2, G4/G5, meshing with corresponding driven gearwheels Gb, GLb, G2b, G45b of a driven shaft 15.

The gearwheels GLa, G1a, G2a, G3a, G45a; GLb, G1b, G2b, G3b, G45b for forward speeds are engageable to said shafts 13, 14; 15 with clutches C1, C2, C3 forming a power flow from the driveshafts 13, 14 to the driven shaft 15 with different ratios.

At least two gearwheels Gb, G3b for forward speeds are rotationally fixed on the driven shaft 15 in a way that each of them is located between a pair of loose gearwheels GLb, G2b; G45b, G1b, wherein the corresponding double-sided clutches C1, C2, which engage said loose gearwheels GLb, G2b; G45b, G1b to the driven shaft 15, are also rotationally fixed on the driven shaft 15, and the dog teeth for alternative engagement of the gearwheels GLb, G2b, G45b and G1b are arranged on both sides of the corresponding fixed gearwheels Gb, G3b.

The transmission 10 comprises an electric machine 17, e.g., a multi-phase induction machine with a squirrel caged rotor 17a and a stator 17b, wherein the windings of the stator 17b are connected to a multi-phase bi-directional AC power inverter 18 and a battery 19, e.g., a low-voltage 12V battery, via fixed electrical connection. The rotor 17a may comprise means for forced cooling, e.g. at least one cooling channel 32 for liquid cooling. The inverter 18 is designed to handle about 3% of rated power of the prime mover 12.

Further the transmission 10 comprises a planetary gearset 20 with three links 21, 22, 23, wherein the first link 21, e.g. a planet carrier, is connected to the first driveshaft 13 and the input shaft 11, the second link 22, e.g. a ring gear, is connected to the second driveshaft 14, and third link 23, e.g. a sun gear, is cinematically connected to the rotor 17a of the electric machine 17 via a cylindrical geartrain 24, and the axis 17a' of the rotor 17a is placed apart from the axis of the input shaft 11. A speed ratio between the second link 22 and the third link 23 is negative for stopped first link 21.

A controllable lock-up clutch CL is arranged between the driving gears on the driveshafts 13, 14, and connects said driveshafts 13, 14 with each other. Reference numerals 13a and 14a indicate the splines for torque transfer from a shifting sleeve of the lock-up clutch CL. In the embodiments shown in the Figs. the lock-up clutch CL is integrated in clutch C3. In detail the lock-up clutch CL and the clutch C3 engage the pinion 13a with the first driveshaft 13 and share a common shifting sleeve 16.

A gearwheel 26 of a differential 25 constantly meshes with a pinion 15a on the driven shaft 15. Driven links 27a, 27b of the differential 25 are connected to output shafts 28a, 28b of the transmission 10. The axis of the gearwheel 26 may be arranged parallel or not parallel to the axis of the input shaft 11. The gearing 15a, 26 may be embodied as cylindrical or bevel, respectively.

The 1st and 3rd speeds G1, G3 are provided by engaged second and third clutches C2, C3 being to second positions R, i.e. in the Figs. right positions, to engage corresponding gear pair G1a, G1b; G3a, G3b. The 2nd speed G2 is provided by engaged first clutch C1 of corresponding gear pair G2a, G2b being shifted to second position R and engaged lock-up clutch CL, i.e. first position L of third clutch C3. The 4th speed G4 is provided by engaged second clutch C2 being shifted to the first position L, i.e. in the Figs. left position, of corresponding gear pair G45a, G45b and engaged lock-up clutch CL. The reverse speed GR is provided by meshing of the reverse idler GRi with driving gearwheel GRa and driven gearwheel Gb, and torque reaction from the rotor 17a of the electric machine 17. Launch speed GL is provided by engaged first clutch C1 of corresponding gear pair GLa, GLb, the first clutch C1 being shifted to first position L, and torque reaction from the rotor 17a of the electric machine 17. The 5th speed G5 is provided by engaged second clutch C2 of corresponding gear pair G45a, G45b, the second clutch C2 being shifted to first position L, and torque reaction from the rotor 17a of the electric machine 17.

In all embodiments the clutches C1, C2, C3 and CL may be designed as simple dog clutches or as dog clutches with synchronizers. A vibration-damping device 29 (e.g. dual-mass flywheel) may be arranged on the input shaft 11.

The clutches C1, C2 are embodied in a way that each of them can alternatively connect two loose gearwheels GLb, G2b; G1b, G45b to the output shaft 15, and wherein said gearwheels GLb, G2b; G1b, G45b are arranged on opposite sides of the gearwheels Gb; G3b which are rotationally fixed to the output shaft 15.

In a preferred embodiment the first clutch C1 is combined with a corresponding driven gearwheel Gb, wherein said driven gearwheel Gb is mounted slidable on the driven shaft 15.

The driven gearwheel Gb may be spur-toothed, and be connected to the driven shaft 15 by splines without helical angle. The dog teeth of the first clutch C1 may have symmetric profile in this case.

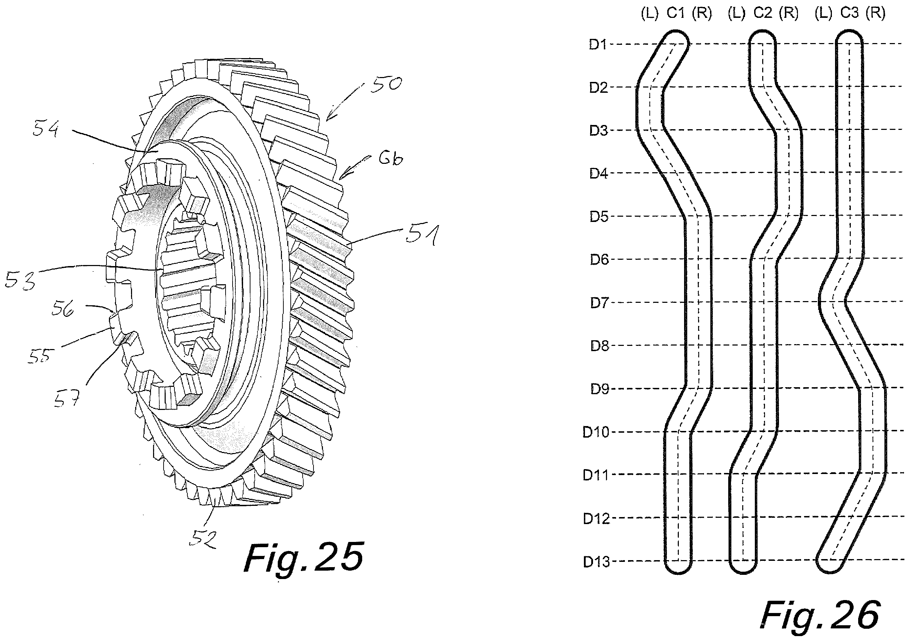

Alternatively the driven gearwheel Gb may have helical gearmesh, and be connected to corresponding splines 15b of the driven shaft 15 by helical splines 53 (see Fig. 25) in a way that axial forces from the gearing and from the splines counteract at least partially balancing. In this case the dog teeth 55 of the clutch C1 may have asymmetric profile in a way that axial forces from the splines 53 and dog teeth 55 also counteract at least partly balancing.

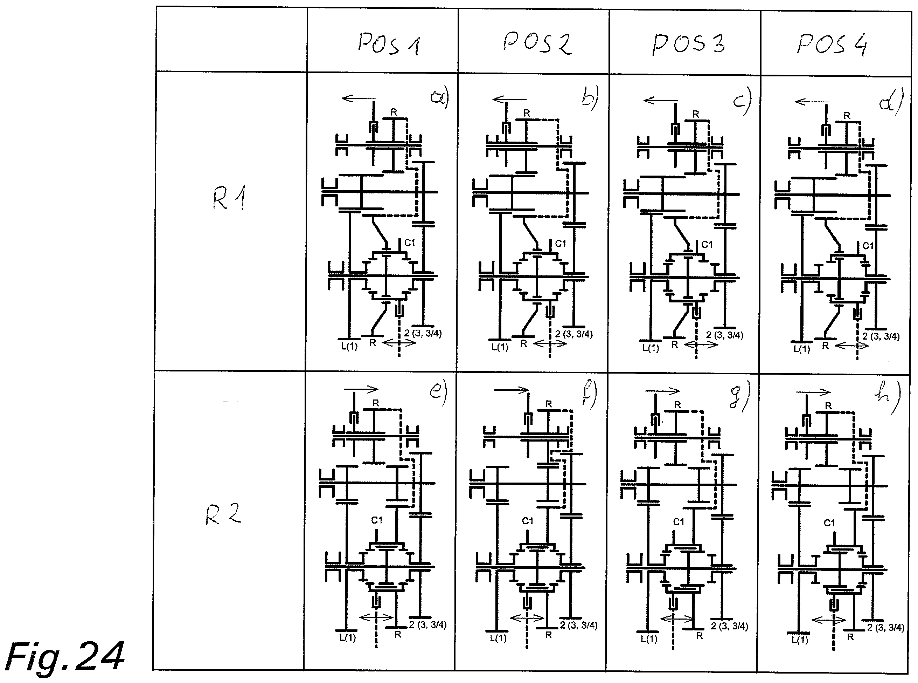

In alternative embodiment (Fig. 24, first row R1), the first clutch C1 is through-mounted on the corresponding driven gearwheel Gb, wherein said driven gearwheel Gb is rigidly fixed on the driven shaft 15.

In preferred embodiments the second clutch C2 is through-mounted on the corresponding driven gearwheel G3b, wherein said driven gearwheel G3b is rigidly fixed on the driven shaft 15(Fig. 1, 3, 5, 6, 8).

The clutches C1, C2, C3 are engaged by a single shifting drum 30, which is electrically driven by a motor 31. The reverse idler gearwheel GRi is engaged by a separate electric actuator or by mechanical drive linked to the hand-operated shifting lever (not shown in the Figs.).

The transmission 10 may optionally comprise park ratchet wheel P, rigidly mounted on the driven shaft 15.

The first embodiment of the transmission 10 shown in Fig. 1 comprises five forward gears G1, G2, G3, G4, G5, a launch gear GL, a reverse gear GR and three clutches C1, C2, C3 with shifting sleeves. It enables operating conditions as follows:

| Gear | C1 | C2 | C3 | Drum 30 position | Min/Avg torque fill at WOT | Park / Reverse gear | Electric Machine 17 Mode |
|---|---|---|---|---|---|---|---|
| P/engine cranking | L | | | D2 | | P | Stopped / driving |
| GR | | | | D1 | | GR | Power generation (small speed) |
| GR, Moving-off backwards | | | | D1 | | GR | Braking |

(continued)

| Gear | C1 | C2 | C3 | Drum 30 position | Min/Avg torque fill at WOT | Park / Reverse gear | Electric Machine 17 Mode |
|---|---|---|---|---|---|---|---|
| N | | | | D1 | | | Idling |
| GL, Moving-off forward/ engine cranking | L | | | D2 | | | Braking / driving |
| G1, preselected GL | L | R | | D3 | | | Power generation |
| G1, doing preselection | | R | | D4 | | | Shaft speed synchronization |
| G1, preselected G2 | R | R | | D5 | | | Power generation |
| G1-G2 shift | R | | | D6 | 77% (passive) | | Braking |
| G2 | R | | L | D7 | | | Power generation |
| G2-G3 shift | R | | | D8 | 38/77% (mixed) | | Driving |
| G3, preselected G2 | R | | R | D9 | | | Power generation |
| G3, doing preselection | | | R | D10 | | | Shaft speed synchronization |
| G3, preselected G4/5 | | L | R | D11 | | | Power generation |
| G3-G4 shift | | L | | D12 | 77% (passive) | | Braking |
| G4 | | L | L | D13 | | | Power generation |
| G4-G5 shift | | L | | D12 | 100% (passive) | | Braking |
| G5 | | L | | D12 | | | Power generation (small speed) |

With reference to Fig. 1 in the shifting table shown above "L" indicates a left side position (first position), and "R" indicates a right side position (second position) of the shifting sleeves of the clutches C1, C2, C3. In the left-side position of the shifting sleeves the clutches C1, C2, C3 are engaged to the corresponding left side gear, respectively. In the right-side position of the shifting sleeves the clutches C1, C2, C3 are engaged to the corresponding right side gear, respectively. The references D1 to D13 indicate angular positions of the drum 30 (see Fig. 26). The column "Min/Avg torque fill at WOT" shows the Minimal/Average Torque fill by electric machine 17 at engine's maximum intake of air and fuel (WOT=wide open throttle). Minimal torque fill is a relation of minimal wheel torque during upshift to the wheel torque after the shift. Average torque fill is a relation of average wheel torque over upshift to the wheel torque after the shift.

Fig. 2 shows a shift pattern of the 5-speed embodiment shown in Fig. 1, wherein angular positions D1 to D13 of the shifting drum 30 are indicated. References "A" indicate fixed gears on the first driveshaft 13 with gear preselection opportunity on second driveshaft 14. References "B" indicate fixed gears on second driveshaft 14 with lock-up clutch CL engaged. References "C" indicate mechanical points with torque reaction from the electric machine 17. The lines, connecting the gears, indicate possible direct shifts, with corresponding angular positions of the shifting drum 30 also indicated.

Fig. 3 shows a 6-speed embodiment with a 5-speed transmission 10 and a single shifting drum 30 for a so called micro hybrid vehicle comprising an input shaft 11 attached to a prime mover 12, for example a combustion engine, a first driveshaft 13 and a second driveshaft 14, wherein the driveshafts 13, 14 are arranged concentrically. In the following only differences to the first embodiment are described.

The first driveshaft 13 comprises a plurality of driving gearwheels G2a, G4a for 2nd and 4th speeds G2, G4 meshing with corresponding driven gearwheels G2b and G4b of the driven shaft 15. The second driveshaft 14 has a plurality of driving gearwheels GRa, G1a, G3a, G56a, for reverse GR, 1st, 3rd and 5th/6th speeds G1, G3, G5/6, meshing with corresponding driven gearwheels Gb, G1b, G3b, G56b of the driven shaft 15.

The gearwheels G1a, G2a, G3a, G4a, G56a; G1b, G2b, G3b, G4b, G56b for forward speeds G1, G2, G3, G4, G5/6 are engageable to said shafts 13, 14; 15 with clutches C1, C2, C3, forming a power flow from the driveshafts 13, 14 to the driven shaft 15 with different ratios.

At least two gearwheels Gb, G4b are rotationally fixed on the driven shaft 15 in a way that each of them is located between a pair of loose gearwheels G1b, G3b; G56b, G2b, wherein the corresponding double-sided clutches C1, C2, which engage said loose gearwheels G1b, G3b; G56b, G2b to the driven shaft 15, are rotationally fixed on the driven shaft 15 and the dog teeth for alternative engagement of the gearwheels G1b, G3b, G56b and G2b are arranged on both sides of the corresponding fixed gearwheels Gb, G4b.

Similar to the embodiment shown in Fig. 1 the transmission 10 comprises an electric machine 17, e.g., a multi-phase induction machine with a squirrel caged rotor 17a and a stator 17b, wherein the windings of the stator 17b are connected to a multi-phase bi-directional AC power inverter 18 and a battery 19, e.g., enhanced low-voltage 12V AGM battery (AGM= Absorbent Glass Mat) or a supercap battery, via fixed electrical connection. The rotor 17a may comprise means for forced cooling, e.g. at least one cooling channel 32 for liquid cooling. The inverter 18 is designed to handle about 6% of rated power of the prime mover 12.

The $2^{nd}$ and $4^{th}$ speeds G2, G4 are provided by engaged second and third clutches C2, C3 of corresponding gear pair G2a, G2b; G4a, G4b shifted to second positions R. The $3^{rd}$ speed G3 is provided by engaged clutch C1 of corresponding gear pair G3a, G3b shifted to second position R and engaged lock-up clutch CL, i.e. shifting third clutch C3 to first position L. The $5^{th}$ speed G5 is provided by engaged second clutch C2 of corresponding gear pair G56a, G56b shifted to first position L and engaged lock-up clutch CL. The reverse speed GR is provided by meshing of the reverse idler GRi with driving gearwheel GRa and driven gearwheel Gb and torque reaction from the rotor 17a of the electric machine 17. The $1^{st}$ speed G1 is provided by engaged first clutch C1 of corresponding gear pair G1a, G1b shifted to first position L and torque reaction from the rotor 17a of the electric machine 17. The $6^{th}$ speed G6 is provided by engaged second clutch C2 of corresponding gear pair G56a, G56b shifted to first position L and torque reaction from the rotor 17a of the electric machine 17.

The clutches C1, C2 are embodied in a way that each of them can alternatively connect two loose gearwheels G1b, G3b; G56b, G2b to the output shaft 15. The gearwheels G1b, G3b; G56b, G2b are arranged on opposite sides of the gearwheel Gb; G4b, respectively, which are fixed to the output shaft 15.

The clutch C2 is through-mounted on the corresponding driven gearwheel G4b, wherein said driven gearwheel G4b is rigidly fixed on the driven shaft 15.

The second embodiment of the transmission 10 shown in Fig. 3 comprises six forward gears G1, G2, G3, G4, G5, G6 a reverse gear GR and three clutches C1, C2, C3 with shifting sleeves. It enables operating conditions as follows:

| Gear | C1 | C2 | C3 | Drum 30 position | Min/Avg torque fill at WOT | Park / Reverse gear | Electric Machine 17 Mode |
|---|---|---|---|---|---|---|---|
| P/engine cranking | L | | | D2 | | P | Stopped / driving |
| GR | | | | D1 | | GR | Power generation (small speed) |
| GR, Moving-off backwards | | | | D1 | | GR | Braking |
| N | | | | D1 | | | Idling |
| G1, Moving-off forward/ engine cranking | L | | | D2 | | | Braking / driving |
| G1 | L | | | D2 | | | Power generation (small speed) |
| G1-G2 shift | L | | | D2 | 77/100% (active) | | Driving |
| G2, preselected G1 | L | R | | D3 | | | Power generation |
| G2, doing preselection | | R | | D4 | | | Shaft speed synchronization |
| G2, preselected G3 | R | R | | D5 | | | Power generation |
| G2-G3 shift | R | | | D6 | 77% (passive) | | Braking |
| G3 | R | | L | D7 | | | Power generation |

(continued)

| Gear | C1 | C2 | C3 | Drum 30 position | Min/Avg torque fill at WOT | Park / Reverse gear | Electric Machine 17 Mode |
|---|---|---|---|---|---|---|---|
| G3-G4 shift | R | | | D8 | 76/100% (mixed) | | Driving |
| G4, preselected G3 | R | | R | D9 | | | Power generation |
| G4, doing preselection | | | R | D10 | | | Shaft speed synchronization |
| G4, preselected G5/6 | | L | R | D11 | | | Power generation |
| G4-G5 shift | | L | | D12 | 77% (passive) | | Braking |
| G5 | | L | L | D13 | | | Power generation |
| G5-G6 shift | | L | | D12 | 100% (passive) | | Braking |
| G6 | | L | | D12 | | | Power generation (small speed) |

With reference to Fig. 3 in the shifting table shown above "L" indicates a left side position (first position), and "R" indicates a right side position (second position) of the shifting sleeves of the clutches C1, C2, C3. In the left-side position of the shifting sleeves the clutches C1, C2, C3 are engaged to the corresponding left side gear, respectively. In the right-side position of the shifting sleeves the clutches C1, C2, C3 are engaged to the corresponding right side gear, respectively. The references D1 to D13 indicate angular positions of the drum 30 (see Fig. 26). The column "Min/Avg torque fill at WOT" shows the Minimal/Average Torque fill by electric machine 17 at engine's maximum intake of air and fuel (WOT=wide open throttle). Minimal torque fill is a relation of minimal wheel torque during upshift to the wheel torque after the shift. Average torque fill is a relation of average wheel torque over upshift to the wheel torque after the shift.

Fig. 4 shows a shift pattern of the 6-speed embodiment shown in Fig. 3, wherein angular positions D1 to D13 of the shifting drum 30 are indicated. References "A" indicate fixed gears on the first driveshaft 13 with gear preselection opportunity on second driveshaft 14. References "B" indicate fixed gears on second driveshaft 14 with lock-up clutch CL engaged. References "C" indicate mechanical points with torque reaction from the electric machine 17. The lines, connecting the gears, indicate possible direct shifts, with corresponding angular positions of the shifting drum 30 also indicated.

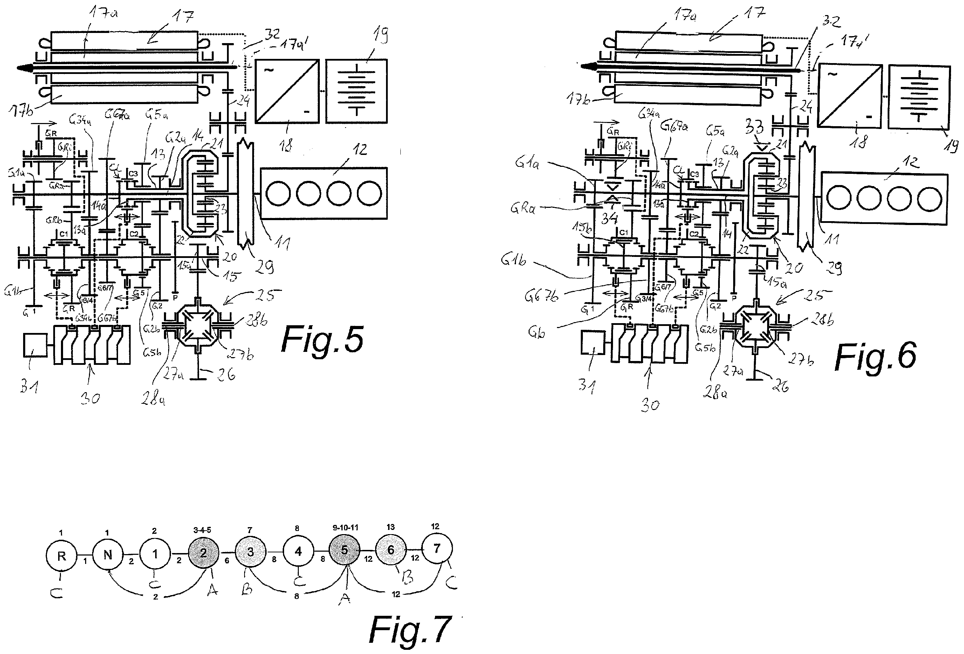

Fig. 5 shows a 7-speed embodiment with a 5-speed transmission 10 and a single shifting drum 30 for a so called mild hybrid vehicle comprising an input shaft 11 attached to a prime mover 12, for example a combustion engine, a first driveshaft 13 and a second driveshaft 14, wherein the driveshafts 13, 14 are arranged concentrically. In the following only differences to the above specified embodiments are described.

The first driveshaft 13 comprises a plurality of driving gearwheels G2a, G5a for 2nd and 5th speeds G2, G5, meshing with corresponding driven gearwheels G2b and G5b of the driven shaft 15. The second driveshaft 14 has a plurality of driving gearwheels GRa, G1a, G34a, G67a, for reverse GR, 1st, 3rd/4th and 6th/7th speeds G1, G3/4, G6/7, meshing with corresponding driven gearwheels Gb, G1b, G34b, G67b of the driven shaft 15.

The gearwheels G1a, G2a, G34a, G5a, G67a; G1b, G2b, G34b, G5b, G67b for forward speeds G1, G2, G3/4, G5, G6/7 are engageable to said shafts 13, 14; 15 with clutches C1, C2, C3, forming a power flow from the driveshafts 13, 14 to the driven shaft 15 with different ratios.

At least two gearwheels Gb, G34b are rotationally fixed on the driven shaft 15 in a way that each of them is located between a pair of loose gearwheels G1b, G34b; G67b, G2b wherein the corresponding double sided clutches C1, C2, which engage said loose gearwheels G1b, G34b; G67b, G2b to the driven shaft 15, are rotationally fixed on the driven shaft 15, and the dog teeth for alternative engagement of the gearwheels G1b, G34b, G67b and G2b are arranged on both sides of the corresponding fixed gearwheels Gb, G5b.

Similar to the embodiments described above the transmission 10 comprises an electric machine 17, e.g., a multi-phase induction machine with a squirrel caged rotor 17a and a stator 17b, wherein the windings of the stator 17b are connected to a multi-phase bi-directional AC power inverter 18 and a battery 19, e.g., a 48V lithium battery or a supercap battery (supercapacitor), via fixed electrical connection. The rotor 17a may comprise means for forced cooling, e.g. at least one cooling channel 32 for liquid cooling. The inverter 18 is designed to handle about 12% of rated power of the prime mover 12.

The 2nd and 5th speeds G2, G4 are provided by engaged second and third clutches C2, C3 of corresponding gear pair G2a, G2b; G5a, G5b, the clutches C2, C3 being shifted to the second positions R. The 3rd speed G3 is provided by engaged first clutch C1 of corresponding gear pair G34a, G34b, the first clutch C1 being shifted to second position R, and engaged lock-up clutch CL. The 6th speed G6 is provided by engaged second clutch C2 of corresponding gear pair G67a, G67b, the second clutch C2 being shifted to first position L, and engaged lock-up clutch CL. The reverse speed GR is provided by meshing of the reverse idler GRi with driving gearwheel GRa and driven gearwheel Gb and torque reaction from the rotor 17a of the electric machine 17. The 1st speed G1 is provided by engaged first clutch C1 of corresponding gear pair G1a, G1b, the first clutch C1 being shifted to first position L, and torque reaction from the rotor 17a of the electric machine 17. The 4th speed G4 is provided by engaged first clutch C1 of corresponding gear pair G34a, G34b, the first clutch C1 being shifted to first position L, and torque reaction from the rotor 17a of the electric machine 17. The 7th speed G7 is provided by engaged second clutch C2 of corresponding gear pair G67a, G67b, the second clutch C2 being shifted to first position L, and torque reaction from the rotor 17a of the electric machine 17.

The clutches C1, C2 are embodied in a way that each of them can alternatively connect two loose gearwheels G1b, G34b; G67b, G2b to the output shaft 15. The gearwheels G1b, G34b; G67b, G2b are arranged on opposite sides of the gearwheel Gb; G5b, respectively, which are rotationally fixed to the output shaft 15.

The clutch C2 is through-mounted on the corresponding driven gearwheel G5b, wherein said driven gearwheel G5b is rigidly fixed on the driven shaft 15.

The third embodiment of the transmission 10 shown in Fig. 5 comprises seven forward gears G1, G2, G3, G4, G5, G6, G7 a reverse gear GR and three clutches C1, C2, C3 with shifting sleeves. It enables operating conditions as follows:

| Gear | C1 | C2 | C3 | Drum 30 position | Min/Avg torque fill at WOT | Park / Reverse gear | Electric Machine 17 Mode |
|---|---|---|---|---|---|---|---|
| P/engine cranking | L | | | D2 | | P | Stopped / driving |
| GR | | | | D1 | | GR | Power generation |
| | | | | | | | (small speed) |
| GR, Moving-off backwards | | | | D1 | | GR | Braking |
| N | | | | D1 | | | Idling |
| G1, Moving-off forward/ engine cranking | L | | | D2 | | | Braking / driving |
| G1 | L | | | D2 | | | Power generation (small speed) |
| G1-G2 shift | L | | | D2 | 47/100% (active) | | Driving |
| G2, preselected G1 | L | R | | D3 | | | Power generation |
| G2, doing preselection | | R | | D4 | | | Shaft speed synchronization |
| G2, preselected G3/4 | R | R | | D5 | | | Power generation |
| G2-G3 shift | R | | | D6 | 77% (passive) | | Braking |
| G3 | R | | L | D7 | | | Power generation |
| G3-G4 shift | R | | | D8 | 100% (passive) | | Braking |
| G4 | R | | | D8 | | | Power generation (small speed) |
| G4-G5 shift | R | | | D8 | 77/100% (active) | | Driving |
| G5, preselected G3/4 | R | | R | D9 | | | Power generation |

(continued)

| Gear | C1 | C2 | C3 | Drum 30 position | Min/Avg torque fill at WOT | Park / Reverse gear | Electric Machine 17 Mode |
|---|---|---|---|---|---|---|---|
| G5, doing preselection | | | R | D10 | | | Shaft speed synchronization |
| G5, preselected G6/7 | | L | R | D11 | | | Power generation |
| G5-G6 shift | | L | | D12 | 77% | | Braking |
| | | | | | (passive) | | |
| G6 | | L | L | D13 | | | Power generation |
| G6-G7 shift | | L | | D12 | 100% (passive) | | Braking |
| G7 | | L | | D12 | | | Power generation (small speed) |

With reference to Fig. 5 in the shifting table shown above "L" indicates a left side position (first position), and "R" indicates a right side position (second position) of the shifting sleeves of the clutches C1, C2, C3. In the left-side position of the shifting sleeves the clutches C1, C2, C3 are engaged to the corresponding left side gear, respectively. In the right-side position of the shifting sleeves the clutches C1, C2, C3 are engaged to the corresponding right side gear, respectively. The references D1 to D13 indicate angular positions of the shifting drum 30 (see Fig. 26). The column "Min/Avg torque fill at WOT" shows the Minimal/Average Torque fill by electric machine 17 at engine's maximum intake of air and fuel (WOT=wide open throttle). Minimal torque fill is a relation of minimal wheel torque during upshift to the wheel torque after the shift. Average torque fill is a relation of average wheel torque over upshift to the wheel torque after the shift.

Fig. 6 shows a 7-speed embodiment with a 5-speed transmission 10, a single shifting drum 30 and one way brakes (OWB) on the driveshafts 13, 14 for a so called mild hybrid vehicle with electric vehicle (EV) maneuvering capability. The transmission comprises an input shaft 11 attached to a prime mover 12, for example a combustion engine, a first driveshaft 13 and a second driveshaft 14, wherein the driveshafts 13, 14 are arranged concentrically.

Additionally to the features of the third embodiment shown in Fig. 5 the transmission 10 shown in Fig. 6 comprises a first one way brake 33 for the first driveshaft 13 and a second one way brake 34 for the second driveshaft 14. The first one way brake 33 is arranged in a way that it locks the first link 21 constantly connected to the first driveshaft 13 in case if the first driveshaft 13 rotates opposite to normal direction of engine crankshaft rotation. In other possible embodiments the first one way brake 33 may be arranged in a way that it locks first driveshaft 13, input shaft 11 or any rotating part of the prime mover 12, which is connected to its crankshaft (not shown on the Figs.). When the prime mover 12 is stopped, the electric machine 17 can provide driving torque from sun gear 23 to ring gear 22 in EV mode. Then, with C1 clutch engaged to its first position, the torque can be delivered to the driving wheels of the vehicle at first gear for forward driving. Alternatively, with reverse idler GRi engaged, the torque can be delivered to the driving wheels of the vehicle at first gear for reverse driving. The carrier 21 provides torque reaction, tending to rotate in opposite direction. The first one way brake 33 locks it, preventing the engine 12 from rotation. The first one way brake 33 can't lock the shaft 13 in case of regenerative braking. So, wheel brakes should be used to decelerate the vehicle in these so called EV maneuvering modes of the mild hybrid vehicle.

In an analogous way the second one way brake 34 locks the second link 22 connected to the second driveshaft 14 in case if the second driveshaft 14 rotates opposite to normal direction of engine crankshaft rotation. In other possible embodiments the second one way brake 34 may be arranged in a way that it locks second driveshaft 14, or any rotating part of the transmission, which is constantly kinematically connected to the second driveshaft 14. When the prime mover 12 is stopped, and electric machine 17 applies the torque, the ring gear 22 provides torque reaction, tending to rotate in opposite direction. The second one way brake 34 locks it, providing engine start capability using electric machine 17 as a starter. This embodiment may be implemented in the vehicles not equipped with advanced brake systems, which can apply torque reaction on the driving wheels automatically (e.g. ESP with hill hold function).

The transmission 10 may comprise independently either one way brake 34 for engine start function or one way brake 33 for EV maneuvering capability, or both of them, as shown in Fig. 6. Also, one way brakes 33, 34 may be implemented with 5-speed and 6-speed embodiments (Fig. 1, 3).

Similar to the third embodiment, the fourth embodiments of the transmission 10 shown in Fig. 6 comprises seven forward gears G1, G2, G3, G4, G5, G6, G7, a reverse gear GR and three clutches C1, C2, C3 with shifting sleeves. It enables operating conditions as follows:

| Gear | C1 | C2 | C3 | Drum 30 position | Min/Avg torque fill at WOT | Park / Reverse gear/OW B | Electric Machine 17 Mode |
|---|---|---|---|---|---|---|---|
| Engine warm cranking | | | L | D1 | | | Driving |
| Pure EV reverse Manoeuvring | | | | D2 | | GR, OWB 33 | Reverse Driving |
| Pure EV forward Manoeuvring | L | | | D3 | | OWB 33 | Reverse Driving |
| Engine cold cranking | | | | D2 | | OWB 34 | Driving |
| P/engine cranking | L | | | D2 | | P | Stopped |
| GR | | | | D2 | | GR | Power generation (small speed) |
| GR, Moving-off backwards | | | | D2 | | GR | Braking |
| N | | | | D2 | | | Idling |
| G1, Moving-off forward/engine cranking | L | | | D3 | | | Braking / driving |
| G1 | L | | | D3 | | | Power generation (small speed) |
| G1-G2 shift | L | | | D3 | 47/100% (active) | | Driving |
| G2, preselected G1 | L | R | | D4 | | | Power generation |
| G2, doing preselection | | R | | D5 | | | Shaft speed synchronization |
| G2, preselected G3/4 | R | R | | D6 | | | Power generation |
| G2-G3 shift | R | | | D7 | 77% | | Braking |
| | | | | | (passive) | | |
| G3 | R | | L | D8 | | | Power generation |
| G3-G4 shift | R | | | D9 | 100% (passive) | | Braking |
| G4 | R | | | D9 | | | Power generation (small speed) |
| G4-G5 shift | R | | | D9 | 77/100% (active) | | Driving |
| G5, preselected G3/4 | R | | R | D10 | | | Power generation |
| G5, doing preselection | | | R | D11 | | | Shaft speed synchronization |
| G5, preselected G6/7 | | L | R | D12 | | | Power generation |
| G5-G6 shift | | L | | D13 | 77% (passive) | | Braking |
| G6 | | L | L | D14 | | | Power generation |

(continued)

| Gear | C1 | C2 | C3 | Drum 30 position | Min/Avg torque fill at WOT | Park / Reverse gear/OW B | Electric Machine 17 Mode |
|---|---|---|---|---|---|---|---|
| G6-G7 shift | | L | | D13 | 100% (passive) | | Braking |
| G7 | | L | | D13 | | | Power generation (small speed) |

With reference to Fig. 6 in the shifting table shown above "L" indicates a left side position (first position), and "R" indicates a right side position (second position of the shifting sleeves of the clutches C1, C2, C3. In the left-side position of the shifting sleeves the clutches C1, C2, C3 are engaged to the corresponding left side gear, respectively. In the right-side position of the shifting sleeves the clutches C1, C2, C3 are engaged to the corresponding right side gear, respectively. The references D1 to D13 indicate angular positions of the shifting drum 30 (see Fig. 26). The column "Min/Avg torque fill at WOT" shows the Minimal/Average Torque fill by electric machine 17 at engine's maximum intake of air and fuel (WOT=wide open throttle). Minimal torque fill is a relation of minimal wheel torque during upshift to the wheel torque after the shift. Average torque fill is a relation of average wheel torque over upshift to the wheel torque after the shift.

Fig. 7 shows a shift pattern of the 7-speed embodiment shown in Fig. 5 or 6, wherein angular positions D1 to D13 of the shifting drum 30 are indicated. References "A" indicate fixed gears on the first driveshaft 13 with gear preselection opportunity on second driveshaft 14. References "B2" indicate fixed gears on second driveshaft 14 with lock-up clutch CL engaged. References "C" indicate mechanical points with torque reaction from the electric machine 17. The lines, connecting the gears, indicate possible direct shifts, with corresponding angular positions of the shifting drum 30 also indicated.

Embodiments first to fourth use equivalent geartrain architecture, drum shifting mechanism and electric machine with rotor cooling system. The difference between these embodiments is the capacity of the power line of the electric machine (inverter, battery), and the gear ratios. The example of the gear ratios for B-class passenger car with natural aspirated petroleum engine is shown below:

| Gear | 5-speed embodiment 3% inverter power | | | 6-speed embodiment 6% inverter power | | | 7-speed embodiment 12% inverter power | | |
|---|---|---|---|---|---|---|---|---|---|
| | Ratio | **Spread** / step | Min/ Avg. torque fill at WOT,% | Ratio | **Spread** / step | Min/ Avg. torque fill at WOT,% | Ratio | **Spread** / step | Min/ Avg. torque fill at WOT,% |
| Planetary gearset | -3.57 | - | - | -3.57 | - | - | -3.57 | - | - |
| Final drive | 4.7 | - | - | 4.7 | - | - | 4.7 | - | - |
| L (1) | 4.47 | - | - | 4.47 | - | - | 4.47 | - | - |
| 1 (2) | 3.31 | - | - | 2.98 | - | - | 2.06 | | |
| 2 (3, 3/4) | 1.77 | - | - | 1.77 | - | - | 1.39 | | |
| 3 (4, 5) | 1.19 | - | - | 1.19 | - | - | 0.85 | | |
| 4/5 (5/6, 6/7) | 0.85 | - | - | 0.85 | - | - | 0.66 | | |
| Output transmission ratios | | | | | | | | | |
| "Launch" | 16.4 | **5.26** | - | - | - | - | - | - | - |
| 1st | 15.57 | 1.05 | 100 | 16.4 | **5.26** | - | 16.4 | **6.73** | - |
| 2nd | 8.34 | 1.87 | 77/77 | 14.02 | 1.17 | 77/100 | 9.68 | 1.69 | 50/100 |
| 3rd | 5.62 | 1.49 | 38/77 | 8.34 | 1.68 | 77/77 | 6.54 | 1.48 | 77/77 |
| 4th | 3.99 | 1.41 | 77/77 | 5.62 | 1.49 | 77/100 | 5.11 | 1.28 | 100 |

(continued)

| Output transmission ratios | | | | | | | | | |
|---|---|---|---|---|---|---|---|---|---|
| 5th | 3.12 | 1.28 | 100 | 3.99 | 1.41 | 77/77 | 3.99 | 1.28 | 77/100 |
| 6th | - | - | - | 3.13 | 1.28 | 100 | 3.12 | 1.28 | 77/77 |
| 7th | - | - | - | - | - | - | 2.44 | 1.28 | 100 |

The step between launch and 1st speed in the 5-speed embodiment is too small to consider launch gear as separate gear. With larger step, torque fill capacity would be reduced. 6-speed embodiment with more powerful inverter makes possible to have larger step from 1st to 2nd speed. The step of 1.17 as shown in the example, is smaller than conventional step in the mechanical transmissions. Therefore, additional speed in the 6-speed embodiment with 6% power rating of the inverter is used to reduce the step between 2nd and 3rd speed (from 1.87 to 1.68), improving performance at low speeds. In the 7-speed embodiment with 12% power rating of the inverter the active torque fill capacity is enough to have ordinary gear step of 1.69 from 1st to 2nd speed. Therefore, 7-speed embodiment comprises extra overdrive speed, and the overall spread is increased from 5.26 to 6.73.

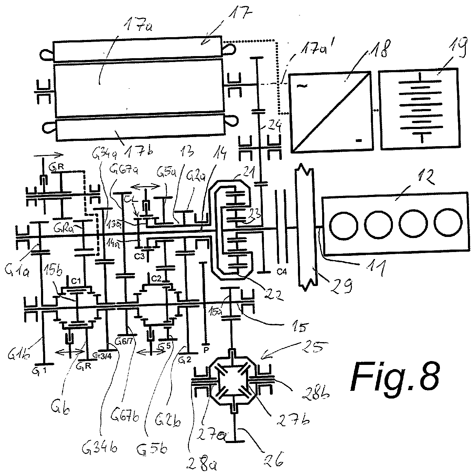

Fig. 8 shows a 7-speed embodiment with a 5-speed transmission 10 and a flexible shifting mechanism for a so called full hybrid vehicle. The transmission comprises an input shaft 11, attached to a prime mover 12, for example a combustion engine, a first driveshaft 13 and a second driveshaft 14, wherein the driveshafts 13, 14 are arranged concentrically.

Additionally to the features of the third embodiment shown in Fig. 5 the transmission 10 shown in Fig. 8 comprises a controllable friction clutch C4, arranged on the input shaft 11, for separating the input shaft 11 from the drive shaft of the prime mover 12.

The fifth embodiments of the transmission 10 shown in Fig. 8 comprises seven forward gears G1, G2, G3, G4, G5, G6, G7, a reverse gear GR and four clutches C1, C2, C3, C4. It enables operating conditions as follows:

| Gear | C1 | C2 | C3 | C4 | Min/Avg torque fill at WOT | Park / Reverse gear | Electric Machine 17 Mode |
|---|---|---|---|---|---|---|---|
| P | | | | | | P | Stopped / driving |
| GR | | | | X | | GR | Power generation (small speed) |
| GR moving-off backwards | | | | X | | GR | Power generation |
| Battery charging / engine cranking | | | L | | | | Power generation / driving |
| Moving-off forward / engine cranking | L | | | X | | | Power generation / driving |
| G1 | L | | | X | | | Power generation (small speed) |
| G1-G2 shift | L | | | X | 100% (active) | | Driving |
| G2, preselected G1 | L | R | | X | | | Power generation |
| G2, doing preselection | | R | | X | | | Shaft speed synchronization |
| G2, preselected G3/4 / boost | R | R | | X | | | Power generation / driving |
| G2-G3 shift | R | | | X | 77% (passive) | | Power generation |
| G3 / boost | R | | L | X | | | Power generation / driving |
| G3-G4 shift | R | | | X | 100% (passive) | | Power generation |

(continued)

| Gear | C1 | C2 | C3 | C4 | Min/Avg torque fill at WOT | Park / Reverse gear | Electric Machine 17 Mode |
|---|---|---|---|---|---|---|---|
| G4 | R | | | X | | | Power generation (small speed) |
| G4-G5 shift | R | | | X | 100% (active) | | Driving |
| G5, preselected G3/4 | R | | R | X | | | Power generation |
| G5, doing preselection | | | R | X | | | Shaft speed synchronization |
| G5, preselected G6/7 / boost | | L | R | X | | | Power generation / driving |
| G5-G6 shift | | L | | X | 77% (passive) | | Power generation |
| G6 / boost | | L | L | X | | | Power generation / driving |
| G6-G7 shift | | L | | X | 100% (passive) | | Power generation |
| G7 | | L | | X | | | Power generation (small speed) |
| Pure EV gear GR / cranking | | | L | - / X | | GR | Driving |
| Pure EV gear G1 / cranking | L | | L | - / X | | | Driving |
| Pure EV gear G2 / cranking | | R | L | - / X | | | Driving |
| Pure EV gear G3 / cranking | R | | L | - / X | | | Driving |
| Pure EV gear G4 / cranking | | L | L | - / X | | | Driving |

With reference to Fig. 8 in the shifting table shown above "L" indicates a left side position (first position), and "R" indicates a right side position (second position) of the shifting sleeves of the clutches C1, C2, C3. In the left-side position of the shifting sleeves the clutches C1, C2, C3 are engaged to the corresponding left side gear, respectively. In the right-side position of the shifting sleeves the clutches C1, C2, C3 are engaged to the corresponding right side gear, respectively. The references "X" in column C4 indicate a closed position of the friction clutch C4. The column "Min/Avg torque fill at WOT" shows the Minimal/Average Torque fill by electric machine 17 at engine's maximum intake of air and fuel (WOT=wide open throttle). Minimal torque fill is a relation of minimal wheel torque during upshift to the wheel torque after the shift. Average torque fill is a relation of average wheel torque over upshift to the wheel torque after the shift.

Additionally to the modes of the third embodiment shown in Fig. 5 the transmission 10 shown in Fig. 8 comprises one reverse and four forward electrical gears. The gear ratio from the first driveshaft 13 to the wheels at reverse electrical gear equals the ratio of the conventional reverse gear. The gear ratio from the first driveshaft 13 to the wheels at first electrical gear is higher than the ratio of the conventional first gear. The gear ratio from the first driveshaft 13 to the wheels at second electrical gear equals to the ratio of the conventional second gear. The gear ratio from the first driveshaft 13 to the wheels at third electrical gear equals to the ratio of the conventional third gear. The gear ratio from the first driveshaft 13 to the wheels at fourth electrical gear equals to the ratio of the conventional sixth gear. The clutch C4 is open on all electrical gears; the prime mover 12 may be stopped or idling. If the prime mover 12 is stopped, it is possible to start it while driving on the electrical gears by closing the clutch C4.

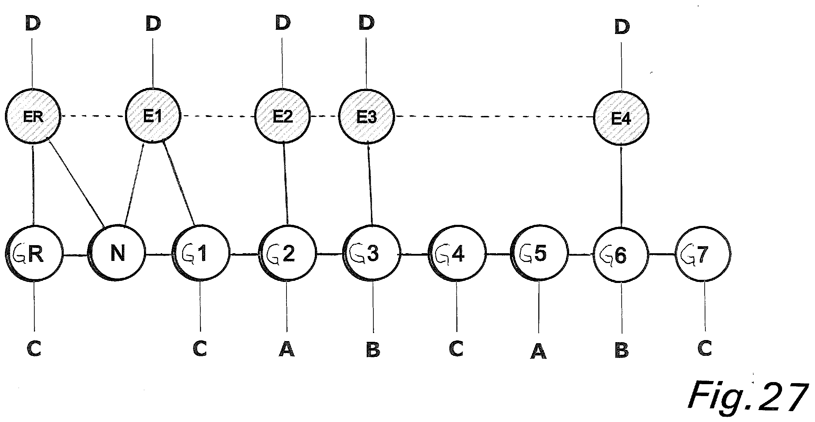

Fig. 27 shows a shift pattern of the 7-speed embodiment shown in Fig. 8. The transmission has forward speeds G1 to G7 and reverse speed GR from the prime mover 12 to the output; and forward speeds E1 to E4, and reverse speed ER from the electric machine 17 to the output. References "A" indicate fixed gears on the first driveshaft 13 with gear preselection opportunity on second driveshaft 14. References "B" indicate fixed gears on second driveshaft 14 with lock-up clutch CL engaged. References "C" indicate mechanical points with torque reaction from the electric machine 17. References "D" indicate electrical gears for pure EV (EV=electric vehicle) modes, with disengaged separation clutch C4. The lines, connecting the gears, indicate possible direct shifts. Solid lines indicate powershifts/torque filled shifts.

Dashed lines indicate shifts with torque interrupts.

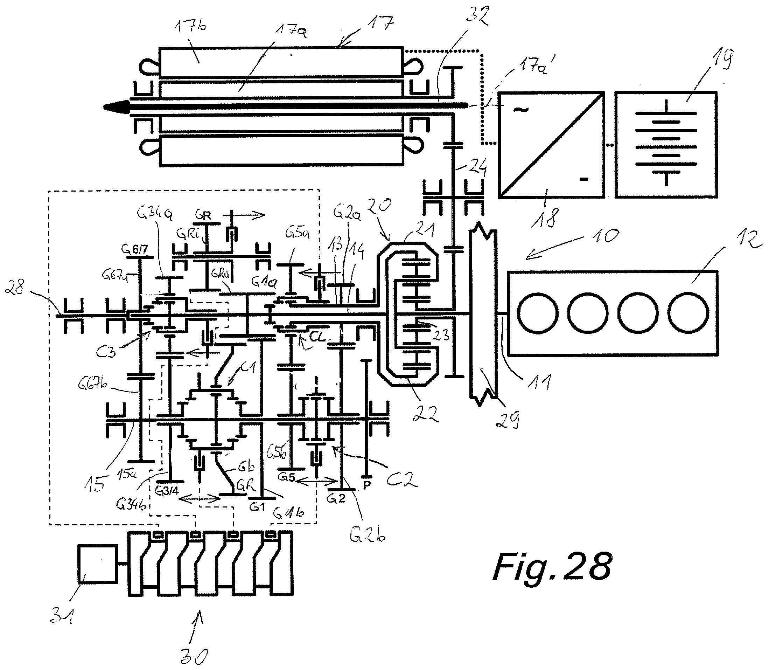

Fig. 28 shows a 7-speed embodiment having an alternative geartrain architecture for longitudinal mounting with coaxial input and output shafts. As for embodiments first to fifth, 5-, 6- and 7-speed embodiments are possible, with different levels of hybridization and with additional features as separation clutch and one way brakes.

7-speed embodiment with a 5-speed geartrain 10 and single shifting drum 30 for a so called mild hybrid vehicle comprising an input shaft 11 attached to a prime mover 12, for example a combustion engine, a first driveshaft 13 and a second driveshaft 14, wherein the driveshafts 13, 14 are arranged concentrically.

The first driveshaft 13 comprises a plurality of driving gearwheels G2a, G5a for 2nd and 5th speeds G2, G5, meshing with corresponding driven gearwheels G2b and G5b of the driven shaft 15. The second driveshaft 14 has a plurality of driving gearwheels GRa, G1a, G34a, for reverse GR, 1st, and 3rd/4th speeds G1, G3/4, meshing with corresponding driven gearwheels Gb, G1b, G34b, of the driven shaft 15.

The gearwheels G1a, G2a, G34a, G5a; G1b, G2b, G34b, G5b for forward speeds G1, G2, G3/4, G5, G6/7 are engageable to said shafts 13, 14; 15 with clutches C1, C2 and C3 forming a power flow from the driveshafts 13, 14 to the driven shaft 15 with different ratios, wherein the first clutch C1 may be shifted to first position L or the second position R, the second clutch may be shifted to second position R and the third clutch C3 may be shifted to second position R.

At least one gearwheel Gb is rotationally fixed on the driven shaft 15 in a way that each of it is located between a pair of loose gearwheels G1b, G34b; wherein the corresponding double-sided first clutch C1 which engage said loose gearwheels G1b, G34b to the driven shaft 15, is also rotationally fixed on the driven shaft 15, and the dog teeth for alternative engagement of the gearwheels G1b, G34b are arranged on both sides of the corresponding fixed gearwheel Gb.

The lock-up clutch CL of the third clutch C3 is arranged coaxially to the driveshafts 13, 14 to connect them with each other.

The driven shaft 15 also comprises fixed pinion G67b, which constantly meshes with gear G67a, fixed to the output shaft 28. The output shaft 28 is arranged coaxially to the input shaft 11. The third clutch C3 is arranged coaxially to the second driveshaft 14 to connect it directly with output shaft 28.

Similar to the embodiments described above the transmission 10 comprises an electric machine 17, e.g., a multi-phase induction machine with a squirrel cage rotor 17a and a stator 17b, wherein the windings of the stator 17b are connected to a multi-phase bi-directional AC power inverter 18 and a battery 19, e.g., a 48V lithium battery or a supercap battery (supercapacitor). The rotor 17a may comprise means for forced cooling, e.g. at least one cooling channel 32 for liquid cooling. The inverter 18 is designed to handle about 12% of rated power of the engine 12.

The 2nd speed G2, G5 is provided by engaged second clutch C2 of corresponding gear pair G2a, G2b, the clutch C2 being shifted to second position R. The 5th speed G5 is provided by engaged second clutch C2 of corresponding gear pair G5a, G5b, the clutch C2 being shifted to first position L. The 3rd speed G3 is provided by engaged first clutch C1 of corresponding gear pair G34a, G34b, the first clutch C1 being shifted to first position L, and engaged lock-up clutch CL. The 6th speed G6 is provided by engaged third clutch C3, the third clutch C3 being shifted to first position L, and lock-up clutch CL. The reverse speed GR is provided by meshing of the reverse idler GRi with driving gearwheel GRa and driven gearwheel Gb and torque reaction from the rotor 17a of the electric machine 17. The 1st speed G1 is provided by engaged clutch C1 of corresponding gear pair G1a, G1b, the first clutch C1 being shifted to second position R, and torque reaction from the rotor 17a of the electric machine 17. The 4th speed G4 is provided by engaged clutch C1 of corresponding gear pair G34a, G34b, the first clutch C1 being shifted to first position L, and torque reaction from the rotor 17a of the electric machine 17. The 7th speed G7 is provided by engaged third clutch C3, the third clutch C3 being shifted to first position L, and torque reaction from the rotor 17a of the electric machine 17.

In comparison with first to fourth embodiments, the shifting drum 30 comprises four grooves instead of three. The 6th and 7th speeds of the transmission shown in Fig. 28 provide higher transmission efficiency, because the powerflow bypasses cylindrical gearings with limited efficiency.

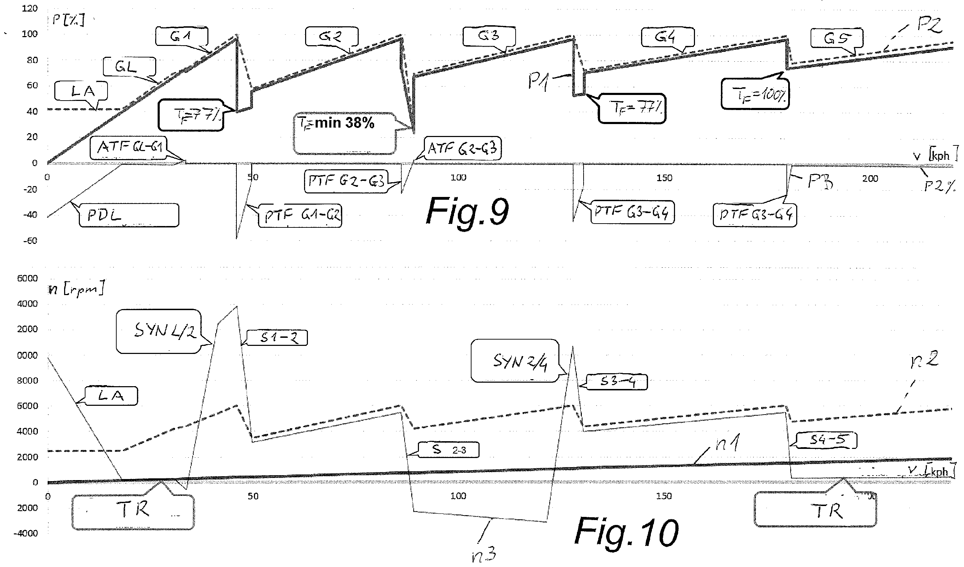

As illustrated in the Fig. 9 to 23 the electric machine 17 is controlled by the power inverter 18 during torque-filled shifts between at least two different speeds in a way that it allows to reduce torque value down to zero on the first driveshaft 13 by applying driving rotor shaft power in case of negative direction of rotation of the rotor 17a, and applying brake rotor shaft power in case of positive direction of rotation of the rotor 17a, wherein the brake power is partly dissipated in the electric machine 17 as a heat and partly delivered to the battery 19 with associated electric power consumers, and the driving power plus internal losses are taken from the battery 19, wherein the torque on the input shaft 11 is dynamically limited by the control system of the prime mover 12 and the control system (inverter) 18 of the electric machine 17 in case if required battery power plus internal losses from the battery 19 exceed the capacity of the battery 19 and/or the control system (inverter) 18 to reduce torque value down to zero on the first driveshaft 13 with full torque on the input shaft 11.

Fig. 9 shows a power flow chart example for a base 5-speed embodiment shown in Fig. 1. In the chart the wheel power P1, the power P2 of the prime mover 12 (combustion engine) and the power P3 of the electric machine 17 are drafted in dependence of the speed v of vehicle. Fig. 10 shows a rotational speed chart example for such five speed transmission with wheel rotational speed n1, rotational speed n2 of the prime mover 12 and rotational speed n3 of the electric machine 17 in dependence of the speed v of vehicle. In this charts "LA" indicates the launch of the vehicle. During launch LA and during each of the gear shifts S1-2, S2-3, S3-4, S4-5 the electric machine 17 absorbs or injects power in order to provide torque fill during shifting. Passive torque fills with power absorption are indicated with PTF, active torque fills with power injection with ATF. PDL indicates the power dissipation by the electric machine 17 during launch LA. In Fig. 9 $T_F$=77%, $T_F$=38% and $T_F$=100% indicate minimal torque fill level during shifting by absorbing power with the electric machine 17. After gear shift S4-5 the electric machine 17 generates constant electric power P2%, for example 1 ... 2 % of engine rated power. In this operating range the electric machine 17 is rotating at slow rotational speed n3, providing torque reaction and electric power generation. This power is consumed by the 12V system of the vehicle. The ramps SYN L/2 and SYN 2/4 of the rotational speed n3 shown in Fig. 10 indicate shaft speed synchronization for preselecting launch gear GL or 2$^{nd}$ gear G2, and 2$^{th}$ gear G2 or 4$^{th}$ gear G4, respectively. Torque reaction of the rotor 17a of the electric machine 17 is indicated with TR.

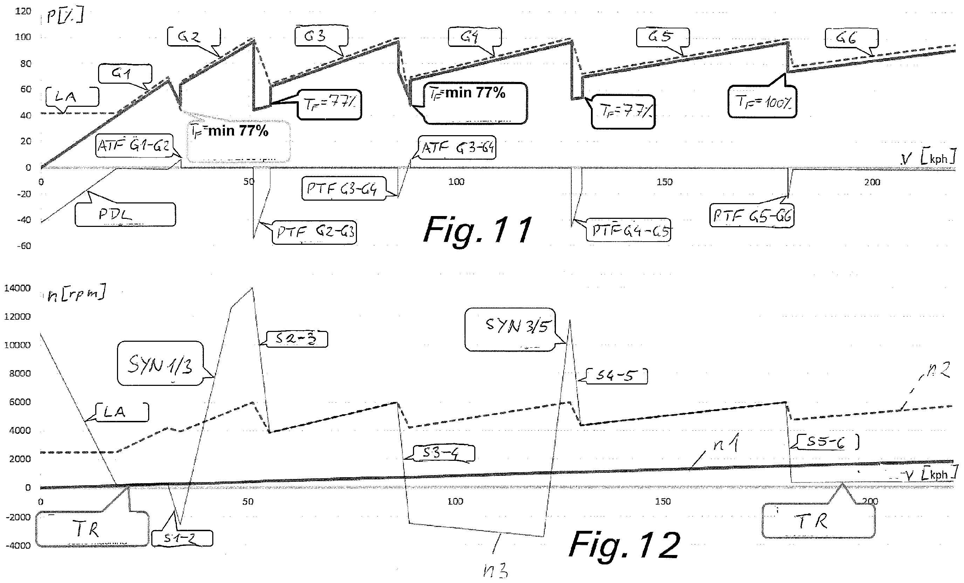

Fig. 11 shows a power flow chart example for 6-speed embodiment shown in Fig. 3. In the chart the wheel power P1, the power P2 of the prime mover 12 (combustion engine) and the power P3 of the electric machine 17 are drafted in dependence of the speed v of vehicle. Fig. 12 shows a rotational speed chart example for such six speed transmission with wheel rotational speed n1, rotational speed n2 of the prime mover 12 and rotational speed n3 of the electric machine 17 in dependence of the speed v of vehicle. In this charts "LA" indicates the launch of the vehicle. During launch LA and during each of the gear shifts S1-2, S2-3, S3-4, S4-5, S5-6 the electric machine 17 absorbs or injects power in order to provide torque fill during shifting. Passive torque fills with power absorption are indicated with PTF, active torque fills with power injection are indicated with ATF. PDL indicates the power dissipation by the electric machine 17 during launch LA. In Fig. 11 $T_F$=77% and $T_F$=100% indicate minimal torque fill level during shifting by absorbing power with the electric machine 17. After gear shift S1-2 or S5-6 the electric machine 17 generates constant electric power P2%, for example 1 ... 2 % of engine rated power. In these operating ranges the electric machine 17 is rotating at slow rotational speed n3, providing torque reaction and electric power generation. This power is consumed by the 12V system of the vehicle. The ramps SYN 1/3 and SYN 3/5 of the rotational speed n3 shown in Fig. 12 indicate shaft speed synchronization for preselecting 1$^{st}$ gear G1 or 3$^{rd}$ gear G3, and 2$^{th}$ gear G2 or 5$^{th}$ gear G5, respectively. Torque reaction of the rotor 17a of the electric machine 17 is indicated with TR.

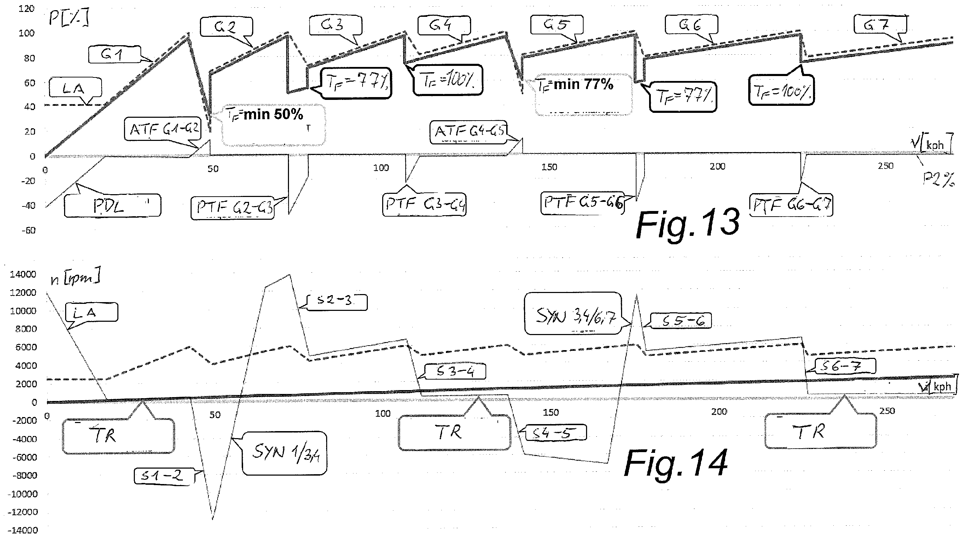

Fig. 13 shows a power flow chart example for 7-speed embodiment shown in Fig. 5 or 6. In the chart the wheel power P1, the power P2 of the prime mover 12 (combustion engine) and the power P3 of the electric machine 17 are drafted in dependence of the speed v of vehicle. Fig. 14 shows a rotational speed chart example for such seven speed transmission with wheel rotational speed n1, rotational speed n2 of the prime mover 12 and rotational speed n3 of the electric machine 17 in dependence of the speed v of vehicle. In this charts "LA" indicates the launch of the vehicle. During launch LA and during each of the gear shifts S1-2, S2-3, S3-4, S4-5, S5-6, S6-7 the electric machine 17 absorbs or injects power in order to provide torque fill during shifting. Passive torque fills with power absorption are indicated with PTF, active torque fills with power injection are indicated with ATF. PDL indicates the power dissipation by the electric machine 17 during launch LA. In Fig. 13 $T_F$=50%, $T_F$=77%, and $T_F$=100% indicate minimal torque fill level during shifting by absorbing power with the electric machine 17. After gear shift S1-2, S3-4 or S6-7 the electric machine 17 generates constant electric power P2%, for example 1 ... 2 % of engine rated power. In these operating ranges the electric machine 17 is rotating at slow rotational speed n3, providing torque reaction and electric power generation. This power is consumed by the 12V/48V systems of the vehicle. The ramps SYN 1/3, 4 and SYN 3,4/6,7 of the rotational speed n3 shown in Fig. 14 indicate shaft speed synchronization for preselecting 1$^{st}$ gear G1 or 3$^{rd}$/4$^{th}$ gear G3/4, and 3$^{rd}$/4$^{th}$ gear G3/4 or 6$^{rd}$/7$^{th}$ gear G6/7, respectively. Torque reaction of the rotor 17a of the electric machine 17 is indicated with TR.

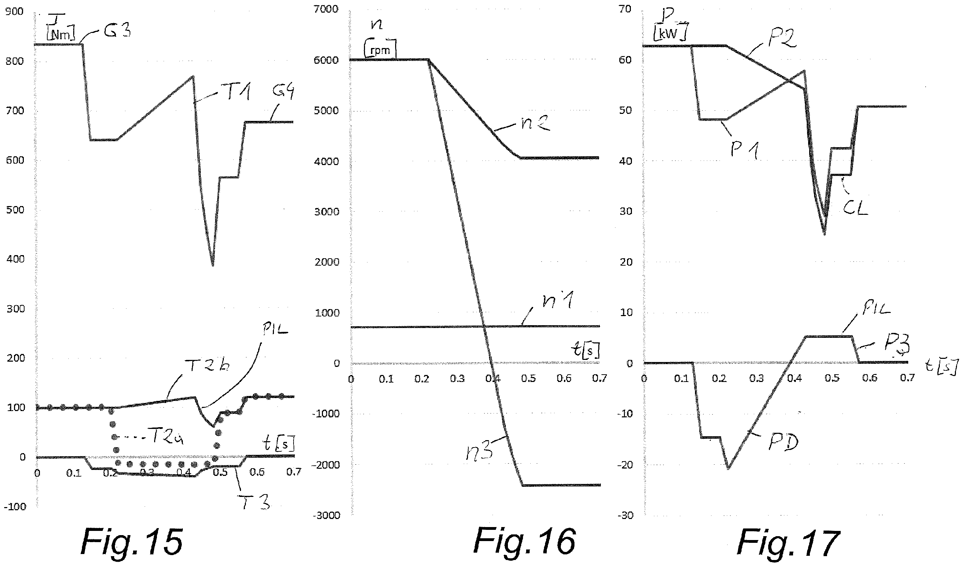

Fig. 15, 16 and 17 show a mixed torque-filled shifting example, i.e. shifting G3-G4 of the 6-speed embodiment, wherein Fig. 15 shows a torque chart, Fig. 16 a rotational speed chart and Fig. 17 a power chart. In Fig. 15 the wheel torque T1, the engine torque T2a from firing and the engine dynamic torque T2b of the prime mover 12 and the torque T3 of the electric machine 17 are drafted in dependence of the time t. In Fig. 16 the wheel speed n1, the engine speed n2 of the prime mover 12 and the speed n3 of the electric machine 17 are drafted in dependence of the time t. Also in Fig. 17 the wheel power P1, the engine dynamic power P2 of the prime mover 12 and the shaft power P3 of the electric machine 17 are drafted in dependence of the time t. The reference PIL indicates the power injection limit in active torque fill phase. CL indicates the engagement of the clutch CL. Reference PD indicates the dissipated power in the rotor cage during passive torque fill phase.

Mixed torque filled shift comprises speed synchronization phase and two torque handover phases. During first torque handover phase the electric machine 17 applies rising brake torque up to the level when the lock up clutch CL clutch is unloaded. The engine torque is kept constant. When lock-up clutch CL is unloaded, it starts being disengaged by turning shifting drum 30 from position D7 to position D8. Due to power dissipation in the rotor cage, the wheel torque drops. When the lock up clutch CL disengagement is complete, speed synchronization phase starts. The control system of the prime mover 12 cuts the firing torque (e.g. by cutting fuel injection or ignition). With brake torque applied by the electric machine 17, the prime mover 12 decelerates. The electric machine 17 also decelerates. Before end of the speed synchronization phase the electric machine 17 changes the direction of rotation. So, the brake torque turns into driving torque, and the electric machine 17 starts consuming power from the battery 19. When the power limit is reached, both dynamic torque of the prime mover 12 and electromagnetic torque on the electric machine 17 are cut (PIL). The wheel torque also drops proportionally. When the speeds of the teeth of the incoming clutch are synchronized, the firing torque is applied by the prime mover 12 again to freeze speed ratio. This torque is also limited in respect to the limit of the electric power. Then second torque handover phase starts. The third clutch C3 is started being engaged to the second position R by turning shifting drum 30 from position D8 to position D9. When the third clutch C3 is fully engaged to the second position R, the electric machine 17 releases brake torque. During first shift phases shaft power of the electric machine 17 remains negative. With large slip brake control method and rotor liquid cooling it is not necessary to cut input torque during passive torque fill phase, even with limited capacity of the power line (inverter 18, battery 19). At the end of active torque fill phases the input torque is limited. The torque drop on the wheels depend on the gear step between corresponding mechanical point and incoming higher gear.

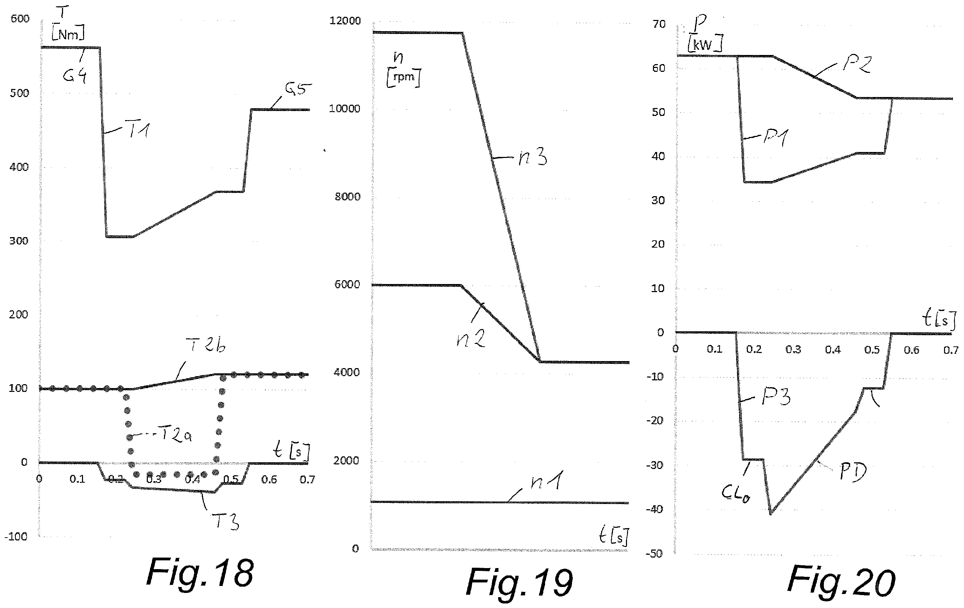

Fig. 18, 19 and 20 show a passive torque-filled shifting example, i.e. shifting G4-G5 of the 6-speed embodiment, analogous to Fig. 15, 16 and 17. In Fig. 18 the wheel torque T1, the engine torque T2a from firing and the engine dynamic torque T2b of the prime mover 12 and the torque T3 of the electric machine 17 are drafted in dependence of the time t. In Fig. 19 the wheel speed n1, the engine speed n2 of the prime mover 12 and the speed n3 of the electric machine 17 are drafted in dependence of the time t. In Fig. 20 the wheel power P1, the engine dynamic power P2 of the prime mover 12 and the shaft power P3 of the electric machine 17 are drafted in dependence of the time t. $CL_o$ indicates the disengagement of the lock-up clutch CL. Reference PD indicates the dissipated power in the rotor cage during passive torque fill phase.

Passive torque filled shift comprises speed synchronization phase and two torque handover phases. During first torque handover phase the electric machine 17 applies rising brake torque up to the level when the third clutch C3 is unloaded by moving from its second position R to the neutral position. The engine torque is kept constant. When the third clutch C3 clutch is unloaded, it starts being disengaged by turning shifting drum 30 from position D11 to position D12. Due to power dissipation in the rotor cage, the wheel torque drops. When disengagement of the third clutch C3 is complete, speed synchronization phase starts. The control system of the prime mover 12 cuts the firing torque (e.g. by cutting fuel injection or ignition). With brake torque applied by the electric machine 17, the prime mover 12 (engine) decelerates. The electric machine 17 also decelerates. When the speeds of the teeth of the incoming clutch are synchronized, the firing torque is applied by the engine again to freeze speed ratio. Then second torque handover phase starts. The lock up clutch CL is started being engaged by turning shifting drum 30 from position D12 to position D13. When the lock up clutch CL is fully engaged, the electric machine 17 releases brake torque. During all shift phases shaft power of the electric machine 17 remains negative. With large slip brake control method and rotor liquid cooling it is not necessary to cut input torque during shifts, even with limited capacity of the power line (inverter 18, battery 19).

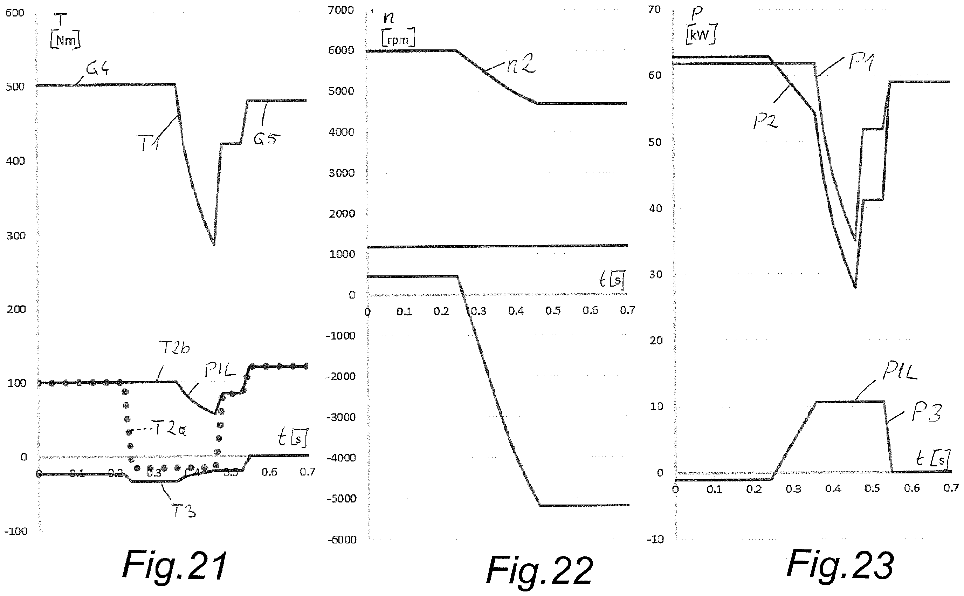

Fig. 21, 22 and 23 show an active torque-filled shifting example, i.e. shifting G4-G5 of the 7-speed embodiment, analogous to Fig. 15 to 20. In Fig. 21 the wheel torque T1, the engine torque T2a from firing and the engine dynamic torque T2b of the prime mover 12 and the torque T3 of the electric machine 17 are drafted in dependence of the time t. In Fig. 22 the wheel speed n1, the engine speed n2 of the prime mover 12 and the speed n3 of the electric machine 17 are drafted in dependence of the time t. In Fig. 23 the wheel power P1, the engine dynamic power P2 of the prime mover 12 and the shaft power P3 of the electric machine 17 are drafted in dependence of the time t.

Active torque filled shift comprises speed synchronization phase and torque handover phase. Before shifting starts, the electric machine 17 applies brake torque reaction on the previous speed, rotating at small speed and generating electric power for vehicle 12V/ 48V electric systems. When shift starts, the control system of the prime mover 12 (combustion engine) cuts the firing torque (e.g. by cutting fuel injection or ignition). With brake torque applied by the electric machine 17, the engine decelerates. The electric machine 17 also decelerates. Before end of the speed synchronization phase the electric machine 17 changes the direction of rotation. So, the brake torque turns into driving torque, and the electric machine 17 starts consuming power from the battery 19. When the power limit is reached, both dynamic torque of the engine and electromagnetic torque on the electric machine 17 are cut (PIL). The wheel torque also drops proportionally. When the speeds of the teeth of the incoming clutch are synchronized, the firing torque is applied by the engine again to freeze speed ratio. This torque is also limited in respect to the limit of the electric power. Then second torque handover phase starts. The third clutch C3 is started being engaged (moving to second position R) by turning shifting drum 30 from position D8 to position D9. When the third clutch C3 is fully engaged (shifted to the second position R), the electric machine 17 releases brake torque. At the end of active torque fill phases the input torque is limited. The torque drop on the wheels depend on the gear step between corresponding mechanical point and incoming higher gear.

The combinations of active and passive torque filled shifts of the 5-, 6-, and 7-speed embodiments, as described above and illustrated in the Fig. 9 to 23, are only possible when gear ratios in the transmission 10 are defined within certain range and meet several mathematical inequalities.

Speed ratio between the second link 22 and the third link 23 for stopped first link 21 has defined value: $i_{PGS}$

<0. This value defines the ratio step between two highest speeds - 4th and 5th for the first embodiment (Fig. 1), 5th and 6th for the second embodiment (Fig. 3), 6th and 7th for the third and fourth embodiments (Figs. 5, 6). At two highest speeds common gearing transfers the power flow (G45, G56 or G67). At pre-last speed the lock-up clutch CL locks driveshafts 13, 14, locking the planetary gearset 20. At last (highest) speed the sun gear 23 is locked by electrically locked rotor 17a. The planetary gearset 20 works like speed multiplier with gear ratio as follows:

$$s_{67} = 1/(1-(1/i_{PGS}));$$

For the examples described above, $i_{PGS}$ = -3.57, $S_{67}$ = 0.78.

The gear ratio of the first gearing (GL, G1) on the second driveshaft 14 has defined value: $i_{G1}$. This value depends on the target ratio of the lowest gear, which may be calculated as follows:

$$i_{1/L} = i_{G1}*i_{FG}/(1-(1/i_{PGS})),$$

wherein $i_{FG}$ is gear ratio of the final drive.

For the examples described above, $i_{G1}$ = 4.47, $i_{FG}$ = 4.7, $i_{1/L}$ = 16.4.

The gear ratio of the first gearing (G1, G2) on the first driveshaft 13 matches the inequality $i_{G2} < i_{G1}/(1-(1/i_{PGS}))$. When the transmission 10 runs on second speed (first speed for first embodiment of the invention), the gear preselection is done by disengaging clutch C1 from the first position L, shaft speed synchronization and engaging the clutch C1 to the second position R In case if $i_{G2} > i_{G1}/(1-(1/i_{PGS}))$, the gear ratio of the first mechanical point is placed between 2nd and 3rd speeds, and it can't be used as fixed speed, because first gearing (G1, G2) is disengaged during gear preselection. If $i_{G2}$ is just slightly smaller than $i_{G1}/(1-(1/i_{PGS}))$, the step between two lowest speeds is small, and two lowest speeds are considered to be a single speed in terms of vehicle performance (Figs. 1, 9, 10). The power-on shift between lowest and next speed after lowest is performed as active torque-filled shift (Fig. 21 to 23), therefore, with power limitation of the battery 19 and inverter 18 the torque fill capacity is larger, when the step between those speeds is smaller. Even with low-power electric system it is beneficial to have active torque-filled shift between lowest and next speed after lowest. The speed of the electric machine 17 is reduced during vehicle launch, comparing to the case when $i_{G2} > i_{G1}/(1-(1/i_{PGS}))$. This means that brake power and the heating of the electric machine are reduced, with a benefit for thermal loads of the electric machine 17 and fuel economy of the vehicle. For the examples described above, the gear ratios are shown in the table.

The gear ratio of the second gearing (G2, G3, G34) on the second driveshaft 14 matches the inequality $i_{G3} < i_{G2}$. This inequality ensures that third speed has lower ratio than second speed (Fig. 3).

The gear ratio of the second gearing (G3, G4, G5) on the first driveshaft 13 matches the inequality $i_{G4} < i_{G3}/(1-(1/i_{PGS}))$.

When the transmission 10 runs on fourth speed (Fig. 3), the gear preselection is done by disengaging clutch C1 from the second position R, shaft speed synchronization and engaging the clutch C2 to the first position L. In case if $i_{G4} > i_{G3}/(1-(1/i_{PGS}))$, the gear ratio of the second mechanical point is placed between 4th and 5th speeds, and it can't be used as fixed speed, because second gearing (G3) is disengaged during gear preselection. If $i_{G4}$ is just slightly smaller than $i_{G3}/(1-(1/i_{PGS}))$, the step between second mechanical point and 4th speed is small, and these two speeds are considered to be a single speed in terms of vehicle performance (Figs. 1, 3, 9 to 12). The power-on shift between second mechanical point and 4th speed is performed as active torque-filled shift (Fig. 15-17), therefore, with power limitation of the battery 19 and inverter 18 the torque fill capacity is larger, when the step between those speeds is smaller. Even with low-power electric system it is beneficial to have active torque-filled shift between second mechanical point and 4th speed. The speed of the electric machine 17 is reduced during shifting from 3rd to 4th speed, comparing to the case when $i_{G4} > i_{G3}/(1-(1/i_{PGS}))$. This means that brake power and the heating of the electric machine are reduced, with a benefit for thermal loads of the electric machine 17 and fuel economy of the vehicle. For the examples described above, the gear ratios are shown in the table.

The gear ratio of the third gearing (G45, G56, G67) on the second driveshaft 14 matches the inequality $i_{G5} < i_{G4}$. This inequality ensures that fifth speed has lower ratio than fourth speed (Fig. 3).

Third mechanical point is used as fixed highest gear in all embodiments, because the shift between highest and previous speed is always passive torque-filled.

Theoretical gear ratios of the mechanical points are calculated above and shown in the table. Those ratios correspond the locked state of the rotor 17a. In real driving the rotor 17a may rotate in positive direction, when the brake power is applied by electric machine 17. The electric machine 17 generates electric power in this case to cover internal losses and to supply the battery 19 and associated on-board electric equipment of the vehicle.

Fig. 24 shows a schedule of variations and positions for the clutch C1 of the transmission according to the invention, wherein the first row R1 illustrates through gear mounted clutches C1, i.e. variants a) to d). The second row R2 illustrates gear integrated clutches C1, i.e. variants e) to h). The columns POS1, POS2, POS3, POS4 show different positions of the clutch C1, wherein the first column POS1 shows all clutch elements, i.e. the reverse idler GRi and the clutch C1, disengaged. The first column POS2 shows the reverse idler GRi engaged, the clutch C1 disengaged. In column POS3 the clutch C1 is shifted to the left side "L" and engaged to the left side loose gearwheel GL or G1b. In column POS4 the clutch C1 is shifted to the right side "R" and engaged to the right side loose gearwheel G2b, G3b or G34b.

Fig. 25 shows an oblique projection of a helical sliding gear 50 wheel which is prepared to be used as rotationally fixed gearwheel Gb of clutch C1. The sliding gear 50 comprises helical teeth 51 with helix angle of about 30°, wherein chamfers 52 are formed on the face side of the teeth 51 for idler gear engagement. The sliding gear 50 further comprises helical splines 53, each spline 53 having helix angle of about 10°. The side of the sliding gear 50 comprises a shoulder 54 for a shifting fork of the clutch C1 and dog teeth 55, each dog tooth 55 having a first dog tooth flank 56 with draft and a second dog tooth flank 57 with undercut. The helical sliding gear 50 is connected to the driven shaft 15 by the helical splines 53 in a way that axial forces from the gearing and from the splines 53 counteract at least partially balancing, wherein the dog teeth 55 of the sliding gear 50 and the corresponding clutch C1 have asymmetric profile in a way that axial forces from the splines 53 and dog teeth 55 also counteract at least partly balancing. The resulting axial force should be smaller than friction force, in order to unload the contact between shifting fork and shoulder 54 and/or detent (not shown in Figs.)

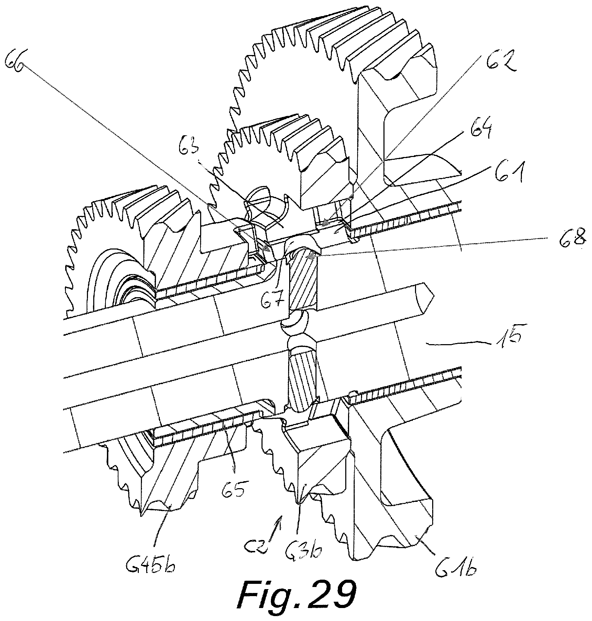

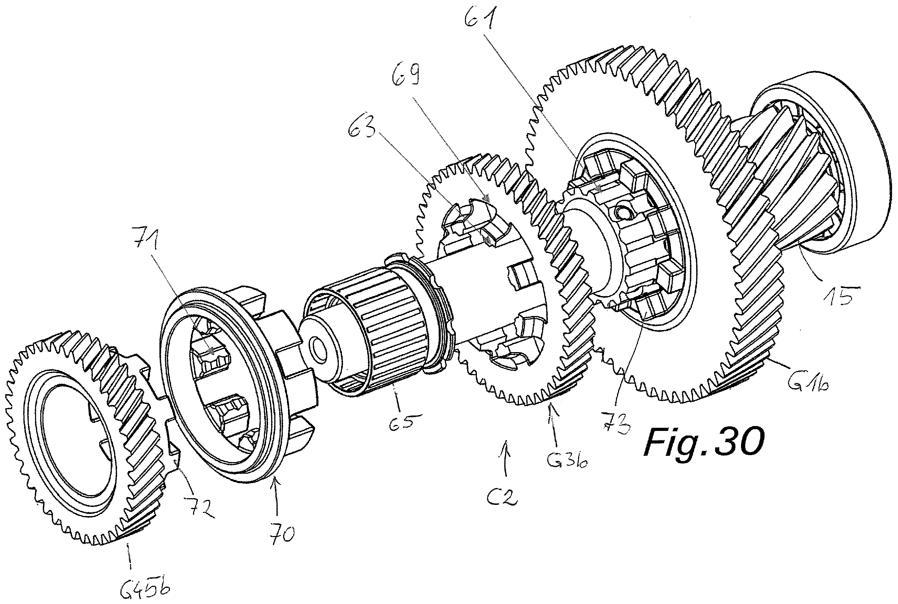

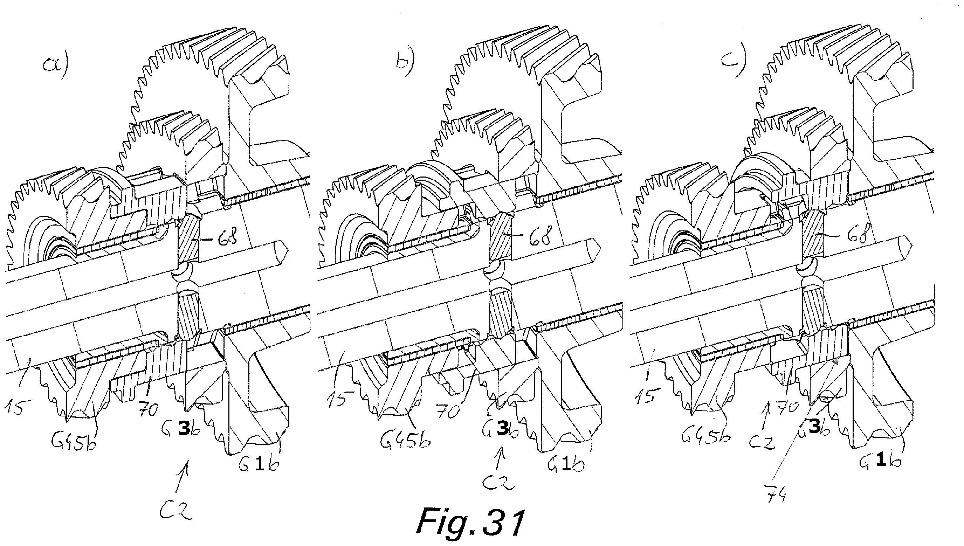

Figs. 29, 30, 31 show the alternative embodiment of the C2 clutch, e.g., in the arrangement of the transmission 10 shown in Fig. 1. The fixed gearwheel G3b is mounted between two loose gearwheels G45b and G1b. It is fixed in rotational direction by the splines 61, 63, preferably with involute profile, and in axial direction by the shoulders 62 on tips 64 of the shaft splines 61 and on the bearing sleeve 65 under the gearwheel G45b. Reference numeral 66 indicates the shoulder on the bearing sleeve 65 of the gearwheel G45b. The fixed gearwheel G3b comprises circular array 67 of the slots 69 on the hub in a way that a fraction of the splines is removed and the fraction of the corresponding spline mesh of the driven shaft 15 is free (Fig. 29). At least one detent 68 is mounted between adjacent spline teeth 61 in that free area 67 within the slot 69. For given example, there are sixteen splines 63 on the shaft 15, eight slots 69 in the gearwheel G3b, and four detents 68 are mounted in the shaft 15. The shifting sleeve 70 of clutch C2 comprises corresponding number of the dog teeth 71 (eight for given example). The side surfaces of the teeth 71 alternatively contact with the corresponding surfaces of the dog teeth 72, 73 of the loose gearwheels G45b and G1b (Fig. 31). Splines are cut on the internal diameter of the dog teeth 72, 73 to transfer the torque from the loose gearwheels G45b and G1b to the shaft 15. Therefore, the dog teeth 72, 73 may go through the slots 69 with a clearance in tangential direction. Comparing to the mounting in the slots, the kinematic chain from the shaft to the shifting sleeve is shortened. This solution reduces the manufacturing cost and makes the design more robust to dimensional tolerances. With the involute profile of the spline 61, 63 and parallel profile of the dog teeth 72, 73 a radial force appears under torque, which pushes the dog teeth 72, 73 away from the splines 61, 63. To avoid overstressing and deflection, the fit with small clearance may be introduced between the slot 69 and dog teeth 72, 73 in radial direction, as indicated with reference numeral 74 (Fig. 31c). In Fig. 31a) the clutch C2 is shown in a first clutch position L, wherein the shifting sleeve 70 is engaged with the loose gearwheel G45b. Fig. 31b) shows the clutch C2 with the shifting sleeve 70 shifted to a neutral (middle) position. Fig. 3c) shows the clutch C2 wherein the loose gearwheel G1b is engaged to the fixed gearwheel G3b with the shifting sleeve being shifted to a second position R.

### Claims

1.    A multi-speed transmission (10), especially for a vehicle, comprising an input shaft (11), a first driveshaft (13) and a second driveshaft (14), each of the two concentric driveshafts (13, 14) having at least two driving gearwheels (G1a, G2a, G3a, G4a, G5a), a driven shaft (15) with a plurality of gearwheels (Gb, GLb, G1b, G2b, G3b, G4b, G34b, G45b, G56b, G67b) on it meshing with the driving gearwheels (GRa, GLa, G1a, G2a, G3a, G4a, G34a, G45a, G56a, G67a) on said driveshafts (13, 14), said gearwheels (GRa, GLa, G1a, G2a, G3a, G4a, G34a, G45a, G56a, G67a; Gb, GLb, G1b, G2b, G3b, G4b, G34b, G45b, G56b, G67b) for forward speeds being engageable to said shafts (13, 14; 15, 16) with clutches (C1, C2, C3) forming a power flow from said driveshafts (13, 14) to the driven shaft (15) with different ratios, wherein one gearwheel in each said gear wheels meshing is constantly connected to a corresponding shaft, and another gearwheel in said gear wheels meshing is engageable to a corresponding shaft by one of said clutches (C1, C2, C3), a controllable lock-up clutch (CL) being arranged between the driveshafts, connecting said driveshafts (13, 14) with each other, an electric machine (17) with a rotor (17a), a planetary gearset (20) with three links (21, 22, 23), a first (21) of said links being connected to the first driveshaft (13) and the input shaft (11), a second (22) of said links being connected to the second driveshaft (14), and a third (23) of said links being kinematically connected to a rotor (17a) of said electric machine (17), wherein

- the speed ratio between the second link (22) and the third link (23) for stopped first link (21) has a defined value: $i_{PGS} < 0$;
- the gear ratio between gearwheels of a first gearing (GL, G1) on the second driveshaft (14) has a defined value: $i_{G1}$; **characterized in that**
- the second driveshaft (14), has at least three driving gearwheels (GRa, GLa, G1a, G2a, G3a, G34a, G45a, G56a, G67a);
- the gear ratio between gearwheels of the first gearing (G1, G2) with one of said gearwheels arranged on the first driveshaft (13) matches the inequality $i_{G2} < i_{G1}/ (1-(1/i_{PGS}))$;
- the gear ratio between gearwheels of a second gearing (G2, G3, G34) with one of said gearwheels arranged on the second driveshaft (14) matches the inequality $i_{G3} < i_{G2}$;
- the gear ratio between gearwheels of the second gearing (G3, G4, G5) with one of said gearwheels arranged on the first driveshaft (13) matches the inequality $i_{G4} < i_{G3}/ (1-(1/i_{PGS}))$;
- the gear ratio between gearwheels of a third gearing (G45, G56, G67)) with one of said gearwheels arranged on the second driveshaft (14) matches the inequality $i_{G5} < i_{G4}$.

2. The multi-speed transmission (10) according to the claim 1, **characterized in that** the driven shaft (15) has at least two gearwheels (Gb, G3b, G4b, G5b, G67b) rotationally fixed on it, at least four gearwheels mounted on it in a rotationally free manner (GLb, G1b, G2b, G3b, G34b, G56b, G45b, G67b), and at least two clutches (C1, C2) mounted on it, wherein at least one of said clutches (C1, C2) is a double-sided clutch, at least one rotationally fixed gearwheel (Gb, G3b, G4b, G5b, G67b) is arranged between two rotationally free gearwheels, and at least one of said double-sided clutches (C1, C2) is arranged between two said rotationally free gearwheels (GLb, G1b, G2b, G3b, G34b, G56b, G45b, G67b) in a way that it can alternatively engage two said rotationally free gearwheels (GLb, G1b, G2b, G3b, G34b, G56b, G45b, G67b) to the driven shaft. (Fig. 1, 3, 5, 6, 28)

3. The multi-speed transmission (10) according to the claim 2, **characterized in that** the shifting sleeve of at least one of said double-sided clutches (C1, C2) is through-mounted on the corresponding driven gearwheel (Gb, G3b, G4b, G5b), wherein said driven gearwheel (Gb, G3b, G4b, G5b) is rigidly fixed on the driven shaft (15).

4. The multi-speed transmission (10) according to one of the claims 1 to 3 **characterized in that** at least one of the clutches (C1, C2, C3) are dog clutches, wherein preferably at least one of the clutches (C1, C2, C3) are dog clutches with synchronizers.

5. The multi-speed transmission (10) according to the claim 4, **characterized in that** the driven shaft (15) comprises at list one spline mesh, the driven gearwheel (G3b, G4b, G5b) is mounted on said splines and locked in axial direction, wherein the driven gearwheel (G3b, G4b, G5b) further comprises a circular array of the slots on the hub in a way that a fraction of the splines is removed and a fraction of the corresponding spline mesh of the driven shaft (15) is free, and wherein the corresponding shifting sleeve (C2) comprises dog teeth with splines on an internal diameter, which interact with free splines on the driven shaft (15), and said dog teeth go through said slots with a clearance in tangential direction (Fig. 29 to 31).

6. The multi-speed transmission (10) according to the claim 2, **characterized in that** at least one clutch (C1) is combined with a corresponding driven gearwheel (Gb), wherein said driven gearwheel (Gb) is slideable on the driven shaft (15).

7. The multi-speed transmission (10) according to the claim 6, **characterized in that** at least one driven gear wheel (Gb) is spur-toothed, and is connected to the driven shaft (15) by straight splines, wherein the dog teeth of corresponding clutch (C1) have symmetric profile.

8. The multi-speed transmission (10) according to the claim 6, **characterized in that** at least one driven gear wheel (Gb) is helical sliding gear (50), and is connected to the driven shaft (15) by helical splines (53) in a way that axial forces from the gearing and from the splines (53) counteract at least partially balancing, wherein the dog teeth (55) of the sliding gear (50) and the corresponding clutch (C1) have asymmetric profiles in a way that axial forces from the splines (53) and dog teeth (55) also counteract at least partly balancing.

9. The multi-speed transmission (10) according to one of the claims 1 to 8, **characterized in that** the first link (21) of the planetary gearset (20) is a planet carrier, the second link (22) is a ring gear, and the third link (23) is a sun gear.

10. The multi-speed transmission (10) according to one of the claims 1 to 9, **characterized in that** first driveshaft (13) is mounted internally through the second driveshaft (14).

11. The multi-speed transmission (10) according to one of the claims 1 to 10, **characterized in that** a vibration-damping device (29) is arranged on the input shaft (11).

12. The multi-speed transmission (10) according to one of the claims 1 to 11, **characterized in that** a controllable separation friction clutch (C4) is arranged on the input shaft (11) (Fig. 8).

13. The multi-speed transmission (10) according to one of the claims 1 to 12, **characterized in that** it comprises a one way brake (33) arranged in a way that it locks the first of the links (21) constantly connected to the first driveshaft (13) in case if said driveshaft (13) rotates opposite to normal direction of engine crankshaft rotation (Fig. 6).

14. The multi-speed transmission (10) according to one of the claims 1 to 13, **characterized in that** it comprises a one way brake (34) arranged in a way that it locks the second of the links (22) constantly connected to the second driveshaft (14) in case if said driveshaft (14) rotates opposite to normal direction of engine crankshaft rotation (Fig. 6).

15. The multi-speed transmission (10) according to one of the claims 1 to 14, **characterized in that** it comprises a park brake device (P), locking the driven shaft to a housing of the transmission (10).

16. The multi-speed transmission (10) according to one of the claims 1 to 15, **characterized in that** the lock-up clutch (CL) and one of the clutches (C3) engaging one of the pinions (13a) with the first driveshaft (13), are sharing a common shifting sleeve (16).

17. The multi-speed transmission (10) according to one of claims 1 to 16, **characterized in that,** the transmission (10) further comprises a reverse pinion (GRa), fixed on the second driveshaft (14), a reverse driven gear, rotationally fixed on the driven shaft (15), and a reverse idler gearwheel (GRi), wherein the clutches (C1, C2, C3) are engaged by a single electrically driven shifting drum (30) and the reverse idler gearwheel (GRi) is engaged by a separate actuator.

18. The multi-speed transmission (10) according to one of the claims 1 to 17, **characterized in that** the rotor (17a) of the electric machine (17) is connected to the third link (23) of the planetary gearset (20) via a cylindrical geartrain (24), and the axis (17a') of the rotor (17a) is placed apart from the axis of the input shaft (11).

19. The multi-speed transmission (10) according to one of the claims 1 to 18, **characterized in that** the electric machine (17) is an induction machine with squirrel-caged rotor (17a).

20. The multi-speed transmission (10) according to claim 19, **characterized in that** the rotor (17a) further comprises at least one cooling channel (32) for liquid cooling.

**Patentansprüche**

1. Mehrganggetriebe (10), insbesondere für ein Fahrzeug, umfassend eine Eingangswelle (11), eine erste Antriebswelle (13) und eine zweite Antriebswelle (14), wobei jede der beiden konzentrischen Antriebswellen (13, 14) wenigstens zwei Antriebszahnräder (G1a, G2a, G3a, G4a, G5a) aufweist, eine Abtriebswelle (15) mit einer Vielzahl von Zahnrädern (Gb, GLb, G1b, G2b, G3b, G4b, G34b, G45b, G56b, G67b) darauf, die mit den Antriebszahnrädern (GRa, GLa, G1a, G2a, G3a, G4a, G34a, G45a, G56a, G67a) auf den Antriebswellen (13, 14) kämmen, wobei diese Zahnräder (GRa, GLa, G1a, G2a, G3a, G4a, G34a, G45a, G56a, G67a; Gb, GLb, G1b, G2b, G3b, G4b, G34b, G45b, G56b, G67b) für Vorwärtsgänge mit den Wellen (13, 14; 15, 16) mittels Kupplungen (C1, C2, C3) in Eingriff gebracht werden können, die einen Kraftfluss von den Antriebswellen (13, 14) zu der Abtriebswelle (15) mit unterschiedlichen Übersetzungen herstellen, wobei ein Zahnrad in jeder Zahnradkämmung ständig mit einer entsprechenden Welle verbunden ist und ein anderes Zahnrad in der Zahnradkämmung durch eine der Kupplungen (C1, C2, C3) mit einer entsprechenden Welle in Eingriff gebracht werden kann, wobei zwischen den Antriebswellen eine steuerbare Überbrückungskupplung (CL) angeordnet ist, welche die Antriebswellen (13, 14) miteinander verbindet, eine elektrische Maschine (17) mit einem Rotor (17a), ein Planetengetriebe (20) mit drei Gliedern (21, 22, 23), wobei ein erstes (21) dieser Glieder mit der ersten Antriebswelle (13) und der Eingangswelle (11) verbunden ist, ein zweites (22) dieser Glieder mit der zweiten Antriebswelle (14) verbunden ist und eine drittes (23) dieser Glieder kinematisch mit einem Rotor (17a) der elektrischen Maschine (17) verbunden ist, wobei

- das Drehzahlverhältnis zwischen dem zweiten Glied (22) und dem dritten Glied (23) bei stillstehendem ersten Glied (21) einen definierten Wert aufweist: $i_{PGS} < 0$;
- das Übersetzungsverhältnis zwischen Zahnrädern eines ersten Getriebes (GL, G1) auf der zweiten Antriebswelle (14) einen definierten Wert aufweist: $i_{G1}$; **dadurch gekennzeichnet, dass**
- die zweite Antriebswelle (14), wenigstens drei Antriebszahnräder (GRa, GLa, G1a, G2a, G3a, G34a, G45a, G56a, G67a) aufweist;
- das Übersetzungsverhältnis zwischen Zahnrädern des ersten Getriebes (G1, G2), wobei eines dieser Zahnräder auf der ersten Antriebswelle (13) angeordnet ist, der Ungleichung $i_{G2} < i_{G1} / (1-(1/i_{PGS}))$ entspricht;
- das Übersetzungsverhältnis zwischen Zahnrädern eines zweiten Getriebes (G2, G3, G34), wobei eines dieser Zahnräder auf der zweiten Antriebswelle (14) angeordnet ist, der Ungleichung $i_{G3} < i_{G2}$ entspricht;
- das Übersetzungsverhältnis zwischen Zahnrädern des zweiten Getriebes (G3, G4, G5), wobei eines dieser Zahnräder auf der ersten Antriebswelle (13) angeordnet ist, der Ungleichung $i_{G4} < i_{G3} / (1-(1/i_{PGS}))$ entspricht;
- das Übersetzungsverhältnis zwischen Zahnrädern eines dritten Getriebes (G45, G56, G67), wobei eines dieser Zahnräder auf der zweiten Antriebswelle (14) angeordnet ist, der Ungleichung $i_{G5} < i_{G4}$ entspricht.

2. Mehrganggetriebe (10) nach Anspruch 1, **dadurch gekennzeichnet, dass** die Abtriebswelle (15) wenigstens zwei Zahnräder (Gb, G3b, G4b, G5b, G67b), die auf ihr drehfixiert sind, wenigstens vier Zahnräder, die drehfrei auf ihr montiert sind (GLb, G1b, G2b, G3b, G34b, G56b, G45b, G67b), und wenigstens zwei auf ihr montierte Kupplungen (C1, C2) aufweist, wobei wenigstens eine der Kupplungen (C1, C2) eine doppelseitige Kupplung ist, wenigstens ein drehfixiertes Zahnrad (Gb, G3b, G4b, G5b, G67b) zwischen zwei drehfreien Zahnrädern angeordnet ist und wenigstens eine der doppelseitigen Kupplungen (C1, C2) zwischen zwei drehfreien Zahnrädern (GLb, G1b, G2b, G3b, G34b, G56b, G45b, G67b) angeordnet ist, derart, dass sie abwechselnd diese zwei drehfreien Zahnräder (GLb, G1b, G2b, G3b, G34b, G56b, G45b, G67b) mit der Abtriebswelle in Eingriff bringen kann. (Fig. 1, 3, 5, 6, 28).

3. Mehrganggetriebe (10) nach Anspruch 2, **dadurch gekennzeichnet, dass** die Schaltmuffe zumindest einer der doppelseitigen Kupplungen (C1, C2) durch das entsprechende Abtriebszahnrad (Gb, G3b, G4b, G5b) durchgesteckt ist, wobei das Abtriebszahnrad (Gb, G3b, G4b, G5b) starr auf der Abtriebswelle (15) befestigt ist.

4. Mehrganggetriebe (10) nach einem der Ansprüche 1 bis 3, **dadurch gekennzeichnet, dass** wenigstens eine der Kupplungen (C1, C2, C3) eine Klauenkupplung ist, wobei vorzugsweise wenigstens eine der Kupplungen (C1, C2, C3) eine Klauenkupplung mit Synchronisator ist.

5. Mehrganggetriebe (10) nach Anspruch 4, **dadurch gekennzeichnet, dass** die Abtriebswelle (15) wenigstens eine Kerbverzahnung umfasst, das Abtriebszahnrad (G3b, G4b, G5b) auf den Kerbzähnen montiert und in axialer Richtung fixiert ist, wobei das Abtriebszahnrad (G3b, G4b, G5b) ferner einen kreisförmigen Bereich der Schlitze an der Nabe umfasst, derart, dass ein Teil der Kerbzähne entfernt ist und ein Teil der entsprechenden Kerbverzahnung der Abtriebswelle (15) frei liegt, und wobei die entsprechende Schaltmuffe (C2) Klauenzähne mit Kerbzähnen auf einem Innendurchmesser umfasst, die mit freien Kerbzähnen auf der Abtriebswelle (15) interagieren, und die Klauenzähne mit einem Spiel in tangentialer Richtung durch die genannten Schlitze hindurchgehen (Fig. 29 bis 31).

6. Mehrganggetriebe (10) nach Anspruch 2, **dadurch gekennzeichnet, dass** wenigstens eine Kupplung (C1) mit einem entsprechenden Abtriebszahnrad (Gb) kombiniert ist, wobei das Abtriebszahnrad (Gb) auf der Abtriebswelle (15) verschiebbar ist.

7. Mehrganggetriebe (10) nach Anspruch 6, **dadurch gekennzeichnet, dass** wenigstens ein Abtriebszahnrad (Gb) geradverzahnt ist und durch gerade Kerbzähne mit der Abtriebswelle (15) verbunden ist, wobei die Klauenzähne der entsprechenden Kupplung (C1) ein symmetrisches Profil aufweisen.

8. Mehrganggetriebe (10) nach Anspruch 6, **dadurch gekennzeichnet, dass** wenigstens ein Abtriebszahnrad (Gb) ein schrägverzahntes Schieberad (50) ist und durch schräge Kerbzähne (53) mit der Abtriebswelle (15) verbunden ist, derart, dass Axialkräfte vom Getriebe und von den Kerbzähnen (53) einander wenigstens teilweise ausgleichend entgegenwirken, wobei die Klauenzähne (55) des Schieberads (50) und der entsprechenden Kupplung (C1) asymmetrische Profile aufweisen, derart, dass Axialkräfte von den Kerbzähnen (53) und Klauenzähnen (55) ebenfalls einander wenigstens teilweise ausgleichend entgegenwirken.

9. Mehrganggetriebe (10) nach einem der Ansprüche 1 bis 8, **dadurch gekennzeichnet, dass** das erste Glied (21) des Planetengetriebes (20) ein Planetenträger ist, das zweite Glied (22) ein Hohlrad ist und das dritte Glied (23) ein Sonnenrad ist.

**10.** Mehrganggetriebe (10) nach einem der Ansprüche 1 bis 9, **dadurch gekennzeichnet, dass** die erste Antriebswelle (13) innen durch die zweite Antriebswelle (14) hindurch montiert ist.

**11.** Mehrganggetriebe (10) nach einem der Ansprüche 1 bis 10, **dadurch gekennzeichnet, dass** auf der Eingangswelle (11) eine schwingungsdämpfende Einrichtung (29) angeordnet ist.

**12.** Mehrganggetriebe (10) nach einem der Ansprüche 1 bis 11, **dadurch gekennzeichnet, dass** auf der Eingangswelle (11) eine steuerbare Trenn-Reibungskupplung (C4) angeordnet ist (Fig. 8).

**13.** Mehrganggetriebe (10) nach einem der Ansprüche 1 bis 12, **dadurch gekennzeichnet, dass** es eine Einwegbremse (33) umfasst, die derart angeordnet ist, dass sie das erste der Glieder (21), das ständig mit der ersten Antriebswelle (13) verbunden ist, verriegelt, falls sich die Antriebswelle (13) entgegen der normalen Drehrichtung der Motorkurbelwelle dreht (Fig. 6).

**14.** Mehrganggetriebe (10) nach einem der Ansprüche 1 bis 13, **dadurch gekennzeichnet, dass** es eine Einwegbremse (34) umfasst, die derart angeordnet ist, dass sie das zweite der Glieder (22), das ständig mit der zweiten Antriebswelle (14) verbunden ist, verriegelt, falls sich die Antriebswelle (14) entgegen der normalen Drehrichtung der Motorkurbelwelle dreht (Fig. 6).

**15.** Mehrganggetriebe (10) nach einem der Ansprüche 1 bis 14, **dadurch gekennzeichnet, dass** es eine Parkbremsvorrichtung (P) umfasst, welche die Abtriebswelle an einem Gehäuse des Getriebes (10) verriegelt.

**16.** Mehrganggetriebe (10) nach einem der Ansprüche 1 bis 15, **dadurch gekennzeichnet, dass** die Überbrückungskupplung (CL) und eine der Kupplungen (C3), die eines der Ritzel (13a) mit der ersten Antriebswelle (13) in Eingriff nehmen, eine gemeinsame Schaltmuffe (16) teilen.

**17.** Mehrganggetriebe (10) nach einem der Ansprüche 1 bis 16, **dadurch gekennzeichnet, dass** das Getriebe (10) ferner ein Rückwärtsritzel (GRa), das auf der zweiten Antriebswelle (14) befestigt ist, ein Rückwärtsabtriebszahnrad, das auf der Abtriebswelle (15) drehfixiert ist, und ein Rückwärtsleerlaufzahnrad (GRi) umfasst, wobei die Kupplungen (C1, C2, C3) durch eine einzige elektrisch angetriebene Schalttrommel (30) in Eingriff genommen werden und das Rückwärtsleerlaufzahnrad (GRi) durch einen separaten Aktuator in Eingriff genommen wird.

**18.** Mehrganggetriebe (10) nach einem der Ansprüche 1 bis 17, **dadurch gekennzeichnet, dass** der Rotor (17a) der elektrischen Maschine (17) über ein Stirnradgetriebe (24) mit dem dritten Glied (23) des Planetengetriebes (20) verbunden ist und die Achse (17a') des Rotors (17a) von der Achse der Eingangswelle (11) entfernt angeordnet ist.

**19.** Mehrganggetriebe (10) nach einem der Ansprüche 1 bis 18, **dadurch gekennzeichnet, dass** die elektrische Maschine (17) eine Induktionsmaschine mit Käfigläufer (17a) ist.

**20.** Mehrganggetriebe (10) nach Anspruch 19, **dadurch gekennzeichnet, dass** der Rotor (17a) ferner wenigstens einen Kühlkanal (32) zur Flüssigkeitskühlung umfasst.

**Revendications**

**1.** Transmission à plusieurs vitesses (10), plus spécialement destinée à un véhicule comprenant un arbre d'entrée (11), un premier arbre d'entraînement (13) et un second arbre d'entraînement (14), chacun des deux arbres d'entraînement (13, 14) qui sont concentriques ayant au moins deux roues d'engrenage d'entraînement (G1a, G2a, G3a, G4a, G5a), un arbre entraîné (15) ayant un ensemble de roues d'engrenage (Gb, GLb, G1b, G2b, G3b, G4b, G34b, G45b, G56b, G67b) montées sur celui-ci venant en prise avec les roues d'engrenage d'entraînement (GRa, GLa, G1a, G2a, G3a, G4a, G34a, G45a, G56a, G67a) situées sur les arbres d'entraînement (13, 14), les roues d'engrenage (GRa, GLa, G1a, G2a, G3a, G4a, G34a, G45a, G56a, G67a ; Gb, GLb, G1b, G2b, G3b, G4b, G34b, G45b, G56b, G67b) destinées aux vitesses en marche avant pouvant être mises en prise avec les arbres (13, 14, ; 15, 16) par l'intermédiaire d'embrayages (C1, C2, C3) formant un flux moteur entre les arbres d'entraînement (13, 14) et l'arbre entraîné (15) avec différents rapports, une roue d'engrenage de chacune des roues d'engrenage venant en prise étant reliée de façon permanente à un arbre correspondant et l'autre roue d'engrenage des roues d'engrenage venant en prise pouvant être mise en prise avec un arbre correspondant par l'un des embrayages (C1, C2, C3), un embrayage de blocage commandable (CL) étant monté entre les arbres d'entraînement, et reliant ces arbres d'entraînement (13, 14), une machine électrique (17) équipée d'un rotor (17a), un jeu d'engrenages planétaires (20) équipé de trois liaisons (21, 22, 23), une première (21) de ces liaisons étant reliée au premier arbre d'entraînement (13) et à l'arbre d'entrée (11), une seconde (22) de ces liaisons étant reliée au second arbre d'entraînement (14) et la troisième liaison (23) étant reliée cinématiquement au rotor (17a) de la machine électrique (17), dans laquelle :

- le rapport de vitesses entre la seconde liaison (22) et la troisième liaison (23) lorsque la première liaison (21) est bloquée a une valeur définie $i_{PGS}<0$,
- le rapport de démultiplication entre les roues d'engrenage d'un premier engrènement (GL, G1) situé sur le second arbre d'entraînement (14) a une valeur définie $i_{G1}$,
**caractérisée en ce que**
- le second arbre d'entraînement (14) comporte au moins trois roues d'engrenage d'entraînement (GRa, GLa, G1a, G2a, G3a, G34a, G45a, G56a, G67a) ;
- le rapport de démultiplication entre des roues d'engrenage du premier engrènement (G1, G2) et l'une des roues d'engrenage situées sur le premier arbre d'entraînement (13) satisfait à l'inégalité $i_{G2} < i_{G1} / (1-(1/i_{PGS}))$ ;
- le rapport de démultiplication entre des roues d'engrenage du second engrènement (G2, G3, G34) et l'une des roues d'engrenage situées sur le second arbre d'entraînement (14) satisfait à l'inégalité $i_{G3}<i_{G2}$,
- le rapport de démultiplication entre des roues d'engrenage du second engrènement (G3, G4, G5) et l'une des roues d'engrenage situées sur le premier arbre d'entraînement (13) satisfait à l'inégalité $i_{G4} < i_{G3} / (1-(1/i_{PGS}))$ ;
- le rapport de démultiplication entre des roues d'engrenage d'un troisième engrènement (G45, G56, G67) et l'une des roues d'engrenage situées sur le second arbre d'entraînement (14) satisfait à l'inégalité $i_{G5}<i_{G4}$.

2. Transmission à plusieurs vitesses (10) conforme à la revendication 1,
**caractérisée en ce que**
l'arbre entraîné (15) comporte au moins deux roues d'engrenage (Gb, G3b, G4b, G5b, G67b) montées solidairement en rotation sur celui-ci, au moins quatre roues d'engrenage montées sur celui-ci de manière libre en rotation (GLb, G1b, G2b, G3b, G34b, G56b, G45b, G67b), et au moins deux embrayages (C1, C2) montés sur celui-ci, au moins l'un de ces embrayages (C1, C2) étant un embrayage à double face, au moins une roue d'engrenage montée solidairement en rotation (Gb, G3b, G4b, G5b, G67b) étant située entre deux roues d'engrenage libres en rotation et au moins l'un des embrayages à double face (C1, C2) étant situé entre deux roues d'engrenage libres en rotation (GLb, G1b, G2b, G3b, G34b, G56b, G45b, G67b) de sorte qu'il puisse alternativement mettre en prise deux roues d'engrenage libres en rotation (GLb, G1b, G2b, G3b, G34b, G56b, G45b, G67b) avec l'arbre entraîné (figures 1, 3, 5, 6, 28).

3. Transmission à plusieurs vitesses (10) conforme à la revendication 2,
**caractérisée en ce que**
le manchon d'enclenchement d'au moins l'un des embrayages à double face (C1, C2) est monté au travers de la roue d'engrenage entraînée correspondante (Gb, G3b, G4b, G5b), la roue d'engrenage entraînée (Gb, G3b, G4b, G5b) étant fixée solidairement sur l'arbre entraîné (15).

4. Transmission à plusieurs vitesses (10) conforme à l'une des revendications 1 à 3,
**caractérisée en ce qu'**
au moins l'un des embrayages (C1, C2, C3) est un embrayage à griffes et de préférence au moins l'un des embrayages (C1, C2, C3) est un embrayage à griffes équipé d'un synchroniseur.

5. Transmission à plusieurs vitesses (10) conforme à la revendication 4,
**caractérisée en ce que**
l'arbre entraîné (15) comporte au moins un engrènement par cannelures, la roue d'engrenage entraînée (G3b, G4b, G5b) est montée sur ces cannelures et bloquée en direction axiale, la roue d'engrenage entraînée (G3b, G4b, G5b) comprenant en outre un agencement circulaire de fentes sur son moyeu de sorte qu'une fraction des cannelures soit enlevée et qu'une fraction des engrènements par cannelures correspondante de l'arbre entraîné (15) soit libre, et le manchon d'enclenchement correspondant (C2) comprenant des dents à griffes avec des cannelures sur son diamètre interne qui coopèrent avec des cannelures libres situées sur l'arbre entraîné (15), les dents à griffes passant au travers des fentes avec un évidement dans la direction tangentielle (figures 29 à 31).

6. Transmission à plusieurs vitesses (10) conforme à la revendication 2,
**caractérisée en ce qu'**
au moins un embrayage (C1) est combiné à une roue d'engrenage entraînée correspondante (Gb), la roue d'engrenage entraînée (Gb) étant susceptible de coulisser sur l'arbre entraîné (15).

7. Transmission à plusieurs vitesses (10) conforme à la revendication 6,
**caractérisée en ce qu'**
au moins une roue d'engrenage entraînée (Gb) comporte une denture droite et est reliée à l'arbre entraîné (15) par des cannelures rectilignes, les dents à griffes de l'embrayage (C1) correspondant ayant des profils symétriques.

8. Transmission à plusieurs vitesses (10) conforme à la revendication 6,
**caractérisée en ce qu'**
au moins une roue d'engrenage entraînée (Gb) est un engrenage coulissant hélicoïdal (50) et est reliée à l'arbre entraîné (15) par des cannelures hélicoïdales (53) de sorte que des forces axiales provenant de l'engrènement et des cannelures (53) agissent en sens contraire pour obtenir un équilibrage au moins partiel, les dents à griffes (55) de l'engrenage coulissant (50) et l'embrayage correspondant (C1) ayant des profils non symétriques de sorte que des forces axiales provenant des cannelures (53) et des dents à griffes (55) agissent également en sens contraire de façon à obtenir un équilibrage au moins partiel.

9. Transmission à plusieurs vitesses (10) conforme à l'une des revendications 1 à 8,
**caractérisée en ce que**
la première liaison (21) du jeu d'engrenages planétaires (20) est un porte pignons satellites, la seconde liaison (22) est un engrenage annulaire et la troisième liaison (23) est un engrenage solaire.

10. Transmission à plusieurs vitesses (10) conforme à l'une des revendications 1 à 9,
**caractérisée en ce que**
le premier arbre d'entraînement (13) est monté à sa partie interne au travers du second arbre d'entraînement (14).

11. Transmission à plusieurs vitesses (10) conforme à l'une des revendications 1 à 10,
**caractérisée en ce qu'**
un dispositif d'amortissement des vibrations (29) est monté sur l'arbre d'entrée (11).

12. Transmission à plusieurs vitesses (10) conforme à l'une des revendications 1 à 11,
**caractérisée en ce qu'**
un engrenage à friction à séparation commandable (C4) est monté sur l'arbre d'entrée (11) (figure 8).

13. Transmission à plusieurs vitesses (10) conforme à l'une des revendications 1 à 12,
**caractérisée en ce qu'**
elle comporte un frein à une voie (33) monté de façon à bloquer la première liaison (21) reliée en permanence au premier arbre d'entraînement (13) lorsque cet arbre d'entraînement (13) tourne en sens opposé au sens de rotation normal du vilebrequin du moteur (figure 6).

14. Transmission à plusieurs vitesses (10) conforme à l'une des revendications 1 à 13,
**caractérisée en ce qu'**
elle comporte un frein à une voie (33) monté de façon à bloquer la seconde liaison (22) reliée en permanence au second arbre d'entraînement (14) lorsque cet arbre d'entraînement (14) tourne en sens opposé au sens de rotation normal du vilebrequin du moteur (figure 6).

15. Transmission à plusieurs vitesses (10) conforme à l'une des revendications 1 à 14,
**caractérisée en ce qu'**
elle comporte un dispositif de frein de stationnement (P) bloquant l'arbre entraîné par rapport au carter de la transmission (10).

16. Transmission à plusieurs vitesses (10) conforme à l'une des revendications 1 à 15,
**caractérisée en ce que**
l'embrayage de verrouillage (CL) et l'un des embrayages (C3) mettant en prise l'un des pignons (13a) avec le premier arbre d'entraînement (13) ont un manchon d'enclenchement commun (16).

17. Transmission à plusieurs vitesses (10) conforme à l'une des revendications 1 à 16,
**caractérisée en ce qu'**
elle comporte en outre un pignon de renversement (GRa), fixé sur le second arbre d'entraînement (14), un engrenage entraîné de renversement fixé solidairement en rotation sur l'arbre entraîné (15) et une roue d'engrenage folle de renversement (GRi), les embrayages (C1, C2, C3) étant mis en prise par un seul tambour d'enclenchement à commande électrique (30) et la roue d'engrenage folle de renversement (GRi) étant mise en prise par un actionneur séparé.

18. Transmission à plusieurs vitesses (10) conforme à l'une des revendications 1 à 17,
    **caractérisée en ce que**
    le rotor (17a) de la machine électrique (17) est relié à la troisième liaison (23) du jeu d'engrenages planétaires (20) par l'intermédiaire d'un train d'engrenage droit (24) et l'axe (17a') du rotor (17a) est situé à distance de l'axe de l'arbre d'entrée (11).

19. Transmission à plusieurs vitesses (10) conforme à l'une des revendications 1 à 18,
    **caractérisée en ce que**
    la machine électrique (17) est une machine à induction ayant un rotor en cage d'écureuil (17a).

20. Transmission à plusieurs vitesses (10) conforme à la revendication 19,
    **caractérisée en ce que**
    le rotor (17a) comporte en outre au moins un canal de refroidissement (32) permettant le refroidissement par un liquide.

*Fig.3*

*Fig.4*

*Fig.1*

*Fig.2*

Fig.6

Fig.5

Fig.7

Fig. 8

Fig.9

Fig.10

*Fig.11*

*Fig.12*

Fig. 13

Fig. 14

*Fig.17*

*Fig.16*

*Fig.15*

Fig.18

Fig.19

Fig.20

EP 3 106 336 B1

*Fig.21*

*Fig.22*

*Fig.23*

EP 3 106 336 B1

| POS4 | POS3 | POS2 | POS1 | |
|---|---|---|---|---|
| d) | c) | b) | a) | R1 |
| h) | g) | f) | e) | R2 |

*Fig. 24*

(L) C1 (R)  (L) C2 (R)  (L) C3 (R)

D1 D2 D3 D4 D5 D6 D7 D8 D9 D10 D11 D12 D13

*Fig.26*

50
Gb
51
52
54
53
56
55
57

*Fig.25*

EP 3 106 336 B1

*Fig.27*

Fig.28

EP 3 106 336 B1

Fig.29

Fig. 30

*Fig.31*

EP 3 106 336 B1

**EP 3 106 336 B1**

## REFERENCES CITED IN THE DESCRIPTION

### Patent documents cited in the description

- US 2011111910 A1
- EP 2161154 A1
- US 2010173746 A1
- US 8771139 B2